(19) Europäisches Patentamt
European Patent Office
Office européen des brevets

(11) **EP 4 254 964 A1**

(12) **EUROPEAN PATENT APPLICATION**
published in accordance with Art. 153(4) EPC

(43) Date of publication:
**04.10.2023 Bulletin 2023/40**

(21) Application number: **22736607.7**

(22) Date of filing: **07.01.2022**

(51) International Patent Classification (IPC):
**H04N 21/234** (2011.01)   **H04N 21/44** (2011.01)
**H04N 19/70** (2014.01)

(52) Cooperative Patent Classification (CPC):
**H04L 67/10; H04M 1/72406; H04M 1/72439;
H04N 19/124; H04N 19/70; H04N 19/91;
H04N 21/234; H04N 21/44**

(86) International application number:
**PCT/CN2022/070815**

(87) International publication number:
**WO 2022/148446 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.01.2021 CN 202110026530**

(71) Applicant: **Huawei Technologies Co., Ltd.
Shenzhen, Guangdong 518129 (CN)**

(72) Inventors:
• **ZHANG, Jinlei
Shenzhen, Guangdong 518129 (CN)**
• **CHEN, Gang
Shenzhen, Guangdong 518129 (CN)**
• **WANG, Miaofeng
Shenzhen, Guangdong 518129 (CN)**

(74) Representative: **Maiwald GmbH
Engineering
Elisenhof
Elisenstrasse 3
80335 München (DE)**

(54) **IMAGE PROCESSING METHOD AND APPARATUS, DEVICE, AND STORAGE MEDIUM**

(57)     This application provides an image processing method and apparatus, a device, and a storage medium, and relates to the field of image processing. In this application, after capturing a RAW image corresponding to a current photographing scene in response to a photographing operation of a user, a terminal device may encode the RAW image corresponding to the current photographing scene to obtain an encoded bitstream of the RAW image corresponding to the current photographing scene, and send the encoded bitstream of the RAW image corresponding to the current photographing scene to a cloud. The cloud may decode the encoded bitstream of the RAW image corresponding to the current photographing scene to obtain a reconstructed RAW image corresponding to the current photographing scene, and process the reconstructed RAW image corresponding to the current photographing scene to generate an image in a first format corresponding to the current photographing scene. In this application, big data resources and computing resources of the cloud can be fully utilized to perform image processing, to achieve better image processing effects. This avoids a problem of limited processing effects caused by a fact that there are constraints in the terminal device when some image processing algorithms in a YUV domain are migrated to a RAW domain in an image processing process.

FIG. 4

**Description**

This application claims priority to Chinese Patent Application No. 202110026530.3, filed with the China National Intellectual Property Administration on January 8, 2021 and entitled "IMAGE PROCESSING METHOD AND APPARATUS, DEVICE, AND STORAGE MEDIUM", which is incorporated herein by reference in its entirety.

**TECHNICAL FIELD**

Embodiments of this application relate to the field of image processing, and in particular, to an image processing method and apparatus, a device, and a storage medium.

**BACKGROUND**

When a mobile phone takes pictures, a camera module of the mobile phone may capture an original image and output the original image to an intermediate processing module. The original image may be referred to as a RAW image or a digital negative. The intermediate processing module of the mobile phone may perform a series of processing on the received RAW image, and finally obtain an image that can be displayed, for example, a JPEG image. The JPEG image may be transmitted to a display of the mobile phone for display, and/or transmitted to a memory of the mobile phone for storage. A process in which the intermediate processing module processes the RAW image to generate the JPEG image may include: performing image signal processing (image signal processing, ISP) on the RAW image; converting the image from a RAW domain to a YUV domain, where an image in the YUV domain may be referred to as a YUV image; then, processing the YUV image by using a YUV domain post-processing algorithm; and finally, encoding, in a JPEG encoding manner, a YUV image obtained through YUV domain processing, to obtain the JPEG image.

Currently, to achieve better image processing effects by the intermediate processing module, some image processing algorithms in the YUV domain may be migrated to the RAW domain. For example, image processing algorithms such as multi-frame registration, fusion, and noise reduction of an HDR in the YUV domain may be migrated to the RAW domain. Advantages of performing image processing in the RAW domain may include: A RAW image includes higher bit information than a YUV image; and because the RAW image does not undergo ISP, information such as colors and details is not damaged, and the like.

However, compared with image processing in the YUV domain, image processing in the RAW domain requires a larger amount of data, and has higher requirements on algorithm performance, memory, and the like. However, due to limited computing resources and memory resources of the mobile phone, there are specified constraints on a manner in which some image processing algorithms in the YUV domain are migrated to the RAW domain in the mobile phone, which is prone to cause a problem of limited processing effects. For example, tailoring and adaptation may need to be performed on some image processing algorithms based on computing power of the mobile phone. Consequently, processing results of the image processing algorithms are not ideal.

**SUMMARY**

Embodiments of this application provide an image processing method and apparatus, a device, and a storage medium, to resolve a problem of limited processing effects caused by a fact that there are constraints in a mobile phone when some image processing algorithms in a YUV domain are migrated to a RAW domain.

According to a first aspect, an embodiment of this application provides an image processing method. The method includes: A terminal device captures a RAW image corresponding to a current photographing scene in response to a photographing operation of a user. The terminal device encodes the RAW image corresponding to the current photographing scene to obtain an encoded bitstream of the RAW image corresponding to the current photographing scene, and sends the encoded bitstream of the RAW image corresponding to the current photographing scene to a cloud. The terminal device receives an image in a first format from the cloud, where the image in the first format is generated by the cloud based on the encoded bitstream of the RAW image corresponding to the current photographing scene.

According to the image processing method, a problem of limited processing effects caused by a fact that there are constraints in a terminal device when some image processing algorithms in a YUV domain are migrated to a RAW domain can be avoided. Big data resources and computing resources on a cloud can be fully utilized to perform RAW domain image processing, ISP processing, and YUV domain processing on a RAW image to achieve a better image processing effect.

Optionally, the RAW image corresponding to the current photographing scene includes one frame or a plurality of frames. That the terminal device encodes the RAW image corresponding to the current photographing scene to obtain an encoded bitstream of the RAW image corresponding to the current photographing scene, and sends the encoded bitstream of the RAW image corresponding to the current photographing scene to a cloud includes: When the RAW image corresponding to the current photographing scene includes the plurality of frames, the terminal device encodes the plurality of frames of RAW images to obtain encoded bitstream of the plurality of frames of RAW images, and sends the encoded bitstream of the plurality of frames of RAW images to the cloud.

In this design, if a camera module of the terminal device captures the plurality of frames of RAW images, the encoded bitstream corresponding to the plurality of frames of RAW images are uploaded to the cloud for processing. However, if one frame of RAW image is captured, processing is directly performed locally (that is, on a terminal device side).

In some other implementations, regardless of the one frame of RAW image or the plurality of frames of RAW images, the terminal device encodes the captured RAW image to obtain an encoded bitstream corresponding to the RAW image, and uploads the encoded bitstream corresponding to the RAW image to the cloud for processing.

Optionally, before the terminal device captures a RAW image corresponding to a current photographing scene in response to a photographing operation of a user, the method further includes: The terminal device determines, in response to a first selection operation of the user, that the RAW image captured during photographing needs to be uploaded to the cloud for processing.

In this design, the terminal device may have a function of enabling the user to select whether to upload the RAW image captured by the camera module to the cloud for processing. The first selection operation may be an operation of using the function by the user on the terminal device. For example, after the mobile phone enables and runs a photographing application, a functional control for selecting whether to upload the RAW image captured by the camera module to the cloud for processing may be provided for the user on a camera screen. The user may perform an operation on the functional control to actively select whether to upload the RAW image captured by the camera module to the cloud for processing. The operation in which the mobile phone selects to upload the RAW image captured by the camera module to the cloud for processing is the first selection operation.

Optionally, that the terminal device encodes the RAW image corresponding to the current photographing scene to obtain an encoded bitstream of the RAW image corresponding to the current photographing scene includes: The terminal device compresses the RAW image corresponding to the current photographing scene, to obtain a compression feature of the RAW image corresponding to the current photographing scene. The terminal device quantizes the compression feature of the RAW image corresponding to the current photographing scene. The terminal device performs entropy encoding on a quantized compression feature of the RAW image corresponding to the current photographing scene, to obtain the encoded bitstream of the RAW image corresponding to the current photographing scene.

Optionally, when the RAW image corresponding to the current photographing scene includes the plurality of frames, that the terminal device compresses the RAW image corresponding to the current photographing scene, to obtain a compression feature of the RAW image corresponding to the current photographing scene includes: The terminal device determines inter-frame correlation between the plurality of the RAW image based on a type of the current photographing scene. The terminal device selects one frame from the plurality of frames of RAW images as a reference frame, and predicts, based on the reference frame and the inter-frame correlation between the plurality of frames of RAW images, another frame other than the reference frame in the plurality of frames of RAW images, to obtain a residual image corresponding to the another frame. The terminal device compresses the residual image corresponding to the another frame other than the reference frame in the plurality of frames of RAW images and the reference frame, to obtain compression features of the plurality of frames of RAW images.

In this design, the terminal device selects one frame from the plurality of frames of RAW images as a reference frame, and predicts, based on the reference frame and the inter-frame correlation between the plurality of frames of RAW images, another frame other than the reference frame in the plurality of frames of RAW images, to obtain a residual image corresponding to the another frame. In other words, the plurality of frames of RAW images are preprocessed based on the inter-frame correlation between the plurality of frames of RAW images. Preprocessing on the plurality of frames of RAW images based on the inter-frame correlation between the plurality of frames of RAW images can further improve a compression rate during compression of the plurality of frames of RAW images, and improve a transmission speed of the encoded bitstream of the RAW image.

Optionally, the method further includes: The terminal device determines the type of the current photographing scene based on metadata information of the plurality of frames of RAW images.

Optionally, that the terminal device encodes the RAW image corresponding to the current photographing scene, to obtain an encoded bitstream of the RAW image corresponding to the current photographing scene includes: The terminal device performs channel coding on the RAW image corresponding to the current photographing scene in a distributed source coding manner, to obtain the encoded bitstream of the RAW image corresponding to the current photographing scene. When the RAW image corresponding to the current photographing scene includes the plurality of frames, the encoded bitstream of the RAW image corresponding to the current photographing scene includes a plurality of groups of bitstream packets in a one-to-one correspondence with the plurality of frames of RAW images, or when the RAW image corresponding to the current photographing scene includes the one frame, the encoded bitstream of the RAW image corresponding to the current photographing scene includes a group of bitstream packets corresponding to the one frame of RAW image. Each group of bitstream packets includes a plurality of bitstream packets, and each bitstream packet includes at least an error correction code and metadata information of one frame of RAW image corresponding to the bitstream packet. That the terminal device sends the encoded bitstream of the RAW image corresponding to the current photographing scene to a cloud includes: The terminal device sequentially uploads, in a unit of a frame, bitstream packets corresponding to each frame of RAW image to the cloud.

In this design, when the terminal device encodes the RAW image in the distributed coding manner, a more accurate prediction value in the cloud indicates fewer error correction codes that need to be transmitted, and a higher compression rate is obtained. In this way, data correlation on the cloud can be fully utilized to achieve a higher compression rate and effectively save upload traffic.

According to a second aspect, an embodiment of this application provides an image processing apparatus. The apparatus may be configured to implement the method in the first aspect. A function of the apparatus may be implemented by hardware, or may be implemented by hardware by executing corresponding software. The hardware or software includes one or more modules or units corresponding to the foregoing function, for example, a camera module, an encoding module, a sending module, and a receiving module.

The camera module is configured to: capture a RAW image corresponding to a current photographing scene in response to a photographing operation of a user. The encoding module is configured to encode the RAW image corresponding to the current photographing scene, to obtain an encoded bitstream of the RAW image corresponding to the current photographing scene. The sending module is configured to send, to a cloud, the encoded bitstream of the RAW image corresponding to the current photographing scene. The receiving module is configured to receive an image in a first format from the cloud, where the image in the first format is generated by the cloud based on the encoded bitstream of the RAW image corresponding to the current photographing scene.

Optionally, the RAW image corresponding to the current photographing scene includes one frame or a plurality of frames. The encoding module is specifically configured to: when the RAW image corresponding to the current photographing scene includes the plurality of frames, encode the plurality of frames of RAW images to obtain an encoded bitstream of the plurality of frames of RAW images. The sending module is specifically configured to send the encoded bitstream of the plurality of frames of RAW images to the cloud.

Optionally, the camera module is further configured to: determine, in response to a first selection operation of the user, that the RAW image captured during photographing needs to be uploaded to the cloud for processing.

Optionally, the encoding module is specifically configured to compress the RAW image corresponding to the current photographing scene, to obtain a compression feature of the RAW image corresponding to the current photographing scene; quantize the compression features of the RAW image corresponding to the current photographing scene; and perform entropy encoding on the quantized compression features of the RAW image corresponding to the current photographing scene, to obtain the encoded bitstream of the RAW image corresponding to the current photographing scene.

Optionally, the encoding module is specifically configured to: when the RAW image corresponding to the current photographing scene includes the plurality of frames, determine inter-frame correlation between the plurality of frames of RAW images based on a type of the current photographing scene; select one frame from the plurality of frames of RAW images as a reference frame, and predict, based on the reference frame and the inter-frame correlation between the plurality of frames of RAW images, another frame other than the reference frame in the plurality of frames of RAW images, to obtain a residual image corresponding to the another frame; and compress the residual image corresponding to the another frame other than the reference frame in the plurality of frames of RAW images and the reference frame, to obtain compression features of the plurality of frames of RAW images.

Optionally, the encoding module is further configured to determine the type of the current photographing scene based on metadata information of the plurality of frames of RAW images.

Optionally, the encoding module is specifically configured to perform channel coding on the RAW image corresponding to the current photographing scene in a distributed source coding manner, to obtain the encoded bitstream of the RAW image corresponding to the current photographing scene. When the RAW image corresponding to the current photographing scene includes the plurality of frames, the encoded bitstream of the RAW image corresponding to the current photographing scene includes a plurality of groups of bitstream packets in a one-to-one correspondence with the plurality of frames of RAW images; or when the RAW image corresponding to the current photographing scene includes one frame, the encoded bitstream of the RAW image corresponding to the current photographing scene includes a group of bitstream packets corresponding to one frame of RAW image. Each group of bitstream packets includes a plurality of bitstream packets, and each bitstream packet includes at least an error correction code and metadata information of one frame of RAW image corresponding to the bitstream packet. The sending module is specifically configured to sequentially upload, in a unit of a frame, bitstream packets corresponding to each frame of RAW image to the cloud.

According to a third aspect, an embodiment of this application provides an electronic device, including: a processor, a memory configured to store executable instructions of the processor. When the processor is configured to execute the instructions, the electronic device implements the image processing method according to the first aspect.

The electronic device may be a mobile terminal such as a mobile phone, a tablet computer, a wearable device, an in-vehicle device, an AR/VR device, a laptop computer, an ultra-mobile personal computer, a netbook, and a personal digital assistant; or the electronic device can also be a digital camera, single-lens reflex camera/mirrorless camera, motion camera, pan-tilt-zoom camera, uncrewed aerial vehicle and other professional image shooting devices.

According to a fourth aspect, an embodiment of this application provides a computer-readable storage medium. The computer-readable storage medium stores computer program instructions. When the computer program instructions are executed by an electronic device, the electronic device implements the image processing method according to the first aspect.

According to a fifth aspect, an embodiment of this application further provides a computer program product, including computer readable code. When the computer readable code runs in an electronic device, the electronic device implements the image processing method according to the first aspect.

For beneficial effects of the second aspect to the fifth aspect, refer to the first aspect. Details are not described herein again.

According to a sixth aspect, an embodiment of this application further provides an image processing method. The method includes: A cloud receives an encoded bitstream of a RAW image corresponding to a current photographing scene from a terminal device. The cloud decodes the encoded bitstream of the RAW image corresponding to the current photographing scene, to obtain a reconstructed RAW image corresponding to the current photographing scene. The cloud processes the reconstructed RAW image corresponding to the current photographing scene, to generate an image in a first format corresponding to the current photographing scene, and sends the image in the first format to the terminal device.

Optionally, that the cloud decodes the encoded bitstream of the RAW image corresponding to the current photographing scene, to obtain a reconstructed RAW image corresponding to the current photographing scene includes: The cloud performs entropy encoding on the encoded bitstream of the RAW image corresponding to the current photographing scene, to obtain a quantized compression feature of the RAW image corresponding to the current photographing scene. The cloud dequantizes on the quantized compression feature of the RAW image corresponding to the current photographing scene, to obtain a compression feature of the RAW image corresponding to the current photographing scene. The cloud decompresses the compression feature of the RAW image corresponding to the current photographing scene, to obtain the reconstructed RAW image corresponding to the current photographing scene.

Optionally, that when the RAW image corresponding to the current photographing scene includes a plurality of frames, the cloud decompresses the compression features of the RAW image corresponding to the current photographing scene, to obtain the reconstructed RAW image corresponding to the current photographing scene includes: The cloud decompresses compression features of the plurality of frames of RAW images, to obtain a reconstructed RAW image corresponding to a reference frame and a residual image corresponding to another frame in the plurality of frames of RAW images. The cloud determines inter-frame correlation between the plurality of frames of RAW images based on a type of the current photographing scene. The cloud reconstructs the plurality of frames of RAW images based on the reconstructed RAW image corresponding to the reference frame, the residual image corresponding to the another frame, and the inter-frame correlation between the plurality of frames of RAW images, to obtain the plurality of frames of reconstructed RAW images that are in a one-to-one correspondence with the plurality of frames of RAW images.

Optionally, an encoded bitstream of the plurality of frames of RAW images further includes metadata information of the plurality of frames of RAW images. Before the cloud determines inter-frame correlation between the plurality of frames of RAW images based on a type of the current photographing scene, the method further includes: The cloud determines the type of the current photographing scene based on the metadata information of the plurality of frames of RAW images.

Optionally, the encoded bitstream of the RAW image corresponding to the current photographing scene is obtained by performing, by the terminal device, channel coding on the RAW image corresponding to the current photographing scene in a distributed source coding manner. When the RAW image corresponding to the current photographing scene includes a plurality of frames, the encoded bitstream of the RAW image corresponding to the current photographing scene includes a plurality of groups of bitstream packets in a one-to-one correspondence with the plurality of frames of RAW images. When the RAW image corresponding to the current photographing scene includes one frame, the encoded bitstream of the RAW image corresponding to the current photographing scene includes a group of bitstream packets corresponding to one frame of RAW image. Each group of bitstream packets includes a plurality of bitstream packets, and each bitstream packet includes at least an error correction code and metadata information of one frame of RAW image corresponding to the bitstream packet. That the cloud decodes the encoded bitstream of the RAW image corresponding to the current photographing scene, to obtain a reconstructed RAW image corresponding to the current photographing scene includes: When the RAW image corresponding to the current photographing scene includes one frame, the cloud decodes, based on an initial prediction value and in an intra-frame prediction manner, a received bitstream packet corresponding to the one frame of RAW image, to obtain a reconstructed RAW image corresponding to the one frame of RAW image. When the RAW image corresponding to the current photographing scene includes a plurality of frames, the cloud decodes, based on an initial prediction value and in an intra-frame prediction manner, a received bitstream packet corresponding to a first frame of RAW image, to obtain a reconstructed RAW image corresponding to the first frame of RAW image. The cloud decodes, based on at least one frame of reconstructed RAW image obtained through decoding and inter-frame correlation between the plurality of frames of RAW images, received bitstream packets corresponding to each frame of RAW image after the first frame of RAW image, to obtain a reconstructed RAW image corresponding to each frame of RAW image after the first frame of RAW image.

Optionally, that when the reconstructed RAW image corresponding to the current photographing scene includes the plurality of frames, the cloud processes the reconstructed RAW image corresponding to the current photographing scene, to generate an image in a first format corresponding to the current photographing scene includes: The cloud fuses a plurality of frames of reconstructed RAW images in a RAW domain into one frame of reconstructed RAW image. The cloud converts the fused one frame of reconstructed RAW image from the RAW domain to a YUV domain, to obtain a YUV image corresponding to the one frame of reconstructed RAW image. The cloud encodes the YUV image corresponding to the one frame of reconstructed RAW image into a first format, to obtain an image in the first format corresponding to the current photographing scene.

Optionally, that when the reconstructed RAW image corresponding to the current photographing scene includes the plurality of frames, the cloud processes the reconstructed RAW image corresponding to the current photographing scene, to generate an image in a first format corresponding to the current photographing scene includes: The cloud converts the plurality of frames of reconstructed RAW images from the RAW domain to a YUV domain, to obtain a plurality of frames of YUV images that are in a one-to-one correspondence with the plurality of frames of reconstructed RAW images. The cloud fuses the plurality of frames of YUV images in a one-to-one correspondence with the plurality of frames of reconstructed RAW images into one frame of YUV image in the YUV domain. The cloud encodes the fused one frame of YUV image into the first format, to obtain the image in the first format corresponding to the current photographing scene.

The image processing method in the sixth aspect is corresponding to the image processing method in the first aspect. Therefore, the image processing method has the same beneficial effect as that in the sixth aspect. Details are not described again.

According to a seventh aspect, an embodiment of this application provides an image processing apparatus. The apparatus may be configured to implement the method in the sixth aspect. A function of the apparatus may be implemented by hardware, or may be implemented by hardware by executing corresponding software. The hardware or software includes one or more modules or units corresponding to the foregoing function, for example, a receiving module, a decoding module, a processing module, and a sending module.

The receiving module is configured to receive, from a terminal device, an encoded bitstream of a RAW image corresponding to a current photographing scene. The decoding module is configured to decode the encoded bitstream of the RAW image corresponding to the current photographing scene, to obtain a reconstructed RAW image corresponding to the current photographing scene. The processing module is configured to process the reconstructed RAW image corresponding to the current photographing scene, to generate an image in a first format corresponding to the current photographing scene. The sending module is configured to send the image in the first format to the terminal device.

For example, the processing module may include a RAW domain post-processing module, an ISP module, a YUV domain post-processing module, a first-format encoder, and the like.

Optionally, the decoding module is specifically configured to perform entropy decoding on the encoded bitstream of the RAW image corresponding to the current photographing scene, to obtain a quantized compression feature of the RAW image corresponding to the current photographing scene; dequantize on the quantized compression features of the RAW image corresponding to the current photographing scene, to obtain a compression feature of the RAW image corresponding to the current photographing scene; and decompress the compression features of the RAW image corresponding to the current photographing scene, to obtain a reconstructed RAW image corresponding to the current photographing scene.

Optionally, the RAW image corresponding to the current photographing scene includes a plurality of frames. The decoding module is specifically configured to decompress compression features of the plurality of frames of RAW images, to obtain a reconstructed RAW image corresponding to a reference frame and a residual image corresponding to another frame in the plurality of frames of RAW images; determine inter-frame correlation between the plurality of frames of RAW images based on a type of the current photographing scene; and reconstruct the plurality of frames of RAW images based on the reconstructed RAW image corresponding to the reference frame, the residual image corresponding to the another frame, and the inter-frame correlation between the plurality of frames of RAW images, to obtain the plurality of frames of reconstructed RAW images that are in a one-to-one correspondence with the plurality of frames of RAW images.

Optionally, the encoded bitstream of the plurality of frames of RAW images further includes metadata information of the plurality of frames of RAW images. The decoding module is further configured to determine the type of the current photographing scene based on metadata information of the plurality of frames of RAW images.

Optionally, the encoded bitstream of the RAW image corresponding to the current photographing scene is obtained by performing, by the terminal device, channel coding on the RAW image corresponding to the current photographing scene in a distributed source coding manner. When the RAW image corresponding to the current photographing scene includes a plurality of frames, the encoded bitstream of the RAW image corresponding to the current photographing scene includes a plurality of groups of bitstream packets in a one-to-one correspondence with the plurality of frames of RAW images. When the RAW image corresponding to the current photographing scene includes one frame, the encoded bitstream of the RAW image corresponding to the current photographing scene includes a group of bitstream packets corresponding to one frame of RAW image. Each group of bitstream packets includes a plurality of bitstream packets, and each bitstream packet includes at least an error correction code and metadata information of one frame of RAW image corresponding to the bitstream packet. When the RAW image corresponding to the current photographing scene includes one frame, the decoding module is specifically configured to decode, based on an initial prediction value and in an intra-frame prediction manner, a received bitstream packet corresponding to the one frame of RAW image, to obtain a reconstructed RAW image corresponding to the one frame of RAW image. When the RAW image corresponding to the current photographing scene includes a plurality of frames, the decoding module is specifically configured to decode, based on an initial prediction value and in an intra-frame prediction manner, a received bitstream packet corresponding to a first frame of RAW image, to obtain a reconstructed RAW image corresponding to the first frame of RAW image; and decode, based on at least one frame of reconstructed RAW image obtained through decoding and inter-frame correlation between the plurality of frames of RAW images, received bitstream packets corresponding to each frame of RAW image after the first frame of RAW image, to obtain a reconstructed RAW image corresponding to each frame of RAW image after the first frame of RAW image.

Optionally, when the reconstructed RAW image corresponding to the current photographing scene includes the plurality of frames, the processing module is specifically configured to: fuse a plurality of frames of reconstructed RAW images in a RAW domain into one frame of reconstructed RAW image; convert the fused one frame of reconstructed RAW image from the RAW domain to a YUV domain, to obtain a YUV image corresponding to the one frame of reconstructed RAW image; and encode the YUV image corresponding to the one frame of reconstructed RAW image into a first format, to obtain an image in the first format corresponding to the current photographing scene.

Optionally, when the reconstructed RAW image corresponding to the current photographing scene includes the plurality of frames, the processing module is specifically configured to: convert the plurality of frames of reconstructed RAW images from the RAW domain to a YUV domain, to obtain a plurality of frames of YUV images that are in a one-to-one correspondence with the plurality of frames of reconstructed RAW images; fuse the plurality of frames of YUV images in a one-to-one correspondence with the plurality of frames of reconstructed RAW images into one frame of YUV image in the YUV domain; and encode the fused one frame of YUV image into the first format, to obtain the image in the first format corresponding to the current photographing scene.

According to an eighth aspect, an embodiment of this application provides an electronic device, including: a processor, a memory configured to store executable instructions of the processor. When the processor is configured to execute the instructions, the electronic device implements the image processing method according to the sixth aspect.

The electronic device may be a cloud server, a server cluster, a cloud platform, or the like.

According to a ninth aspect, an embodiment of this application provides a computer-readable storage medium. The computer-readable storage medium stores computer program instructions. When the computer program instructions are executed by an electronic device, the electronic device implements the image processing method according to the sixth aspect.

According to a tenth aspect, an embodiment of this application further provides a computer program product, including computer readable code. When the computer readable code runs in an electronic device, the electronic device implements the image processing method according to the sixth aspect.

For beneficial effects of the seventh aspect to the tenth aspect, refer to the descriptions in the sixth aspect. Details are not described herein again.

It should be understood that, descriptions of technical features, technical solutions, beneficial effect, or similar words in this application do not imply that all features and advantages can be implemented in any individual embodiment. On the contrary, it may be understood that, the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in embodiments may be combined in any proper manner. A person skilled in the art may understand that an embodiment may be implemented without one or more specific technical features or technical solutions, or beneficial effect in a specific embodiment. In other embodiments, additional technical features and beneficial effect may be identified in the specific embodiment that does not reflect all embodiments.

**BRIEF DESCRIPTION OF DRAWINGS**

FIG. 1 is a schematic diagram of a photographing principle;

FIG. 2 is a schematic diagram of a structure of a device-cloud synergy system according to an embodiment of this application;

FIG. 3 is a schematic diagram of a structure of a terminal device according to an embodiment of this application;

FIG. 4 is a schematic diagram of interaction between a mobile phone and a cloud according to an embodiment of this application;

FIG. 5 is a schematic diagram of a camera screen according to an embodiment of this application;

FIG. 6 is another schematic diagram of a camera screen according to an embodiment of this application;

FIG. 7 is still another schematic diagram of a camera screen according to an embodiment of this application;

FIG. 8 is yet another schematic diagram of a camera screen according to an embodiment of this application;

FIG. 9 is a schematic diagram of an encoding module according to an embodiment of this application;

FIG. 10 is a schematic diagram of a decoding module according to an embodiment of this application;

FIG. 11 is a schematic diagram of RGGB format arrangement of a RAW image;

FIG. 12 is another schematic diagram of an encoding module according to an embodiment of this application;

FIG. 13 is another schematic diagram of a decoding module according to an embodiment of this application;

FIG. 14 is a schematic diagram of a processing procedure of a decoding module according to an embodiment of this application;

FIG. 15 is a schematic diagram of a structure of an image processing apparatus according to an embodiment of this application; and

FIG. 16 is a schematic diagram of a structure of another image processing apparatus according to an embodiment of this application.

**DESCRIPTION OF EMBODIMENTS**

Embodiments of this application are applicable to a scenario in which a terminal device with a photographing function performs photographing.

Optionally, the terminal device may be a mobile terminal, such as a mobile phone, a tablet computer, a wearable device, an in-vehicle device, an augmented reality (augmented reality, AR)/virtual reality (virtual reality, VR) device, a laptop computer, or an ultra-mobile personal computer (ultra-mobile personal computer, UMPC), a netbook, or a personal digital assistant (personal digital assistant, PDA), or the terminal device may be a professional image shooting device such as a digital camera, a single-lens reflex camera/mirrorless camera, a motion camera, a pan-tilt-zoom camera, or an uncrewed aerial vehicle. A specific type of the terminal device is not limited in embodiments of this application.

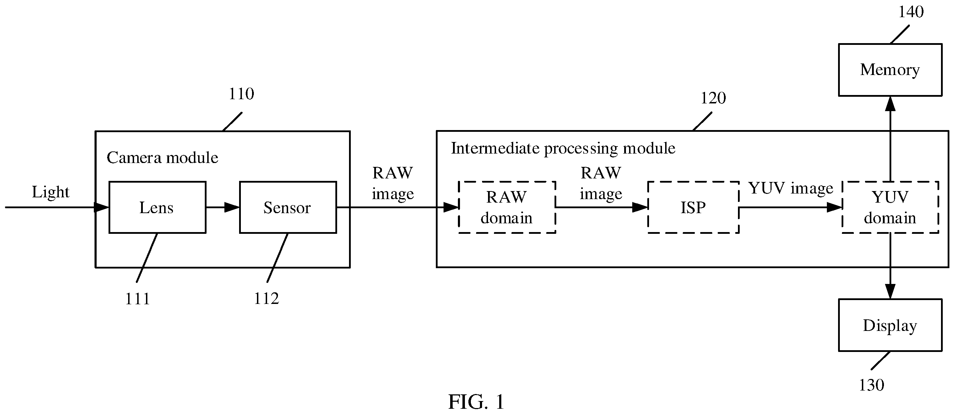

For example, the terminal device is a mobile phone. FIG. 1 is a schematic diagram of a photographing principle. As shown in FIG. 1, generally, a camera module 110 (or referred to as a camera module) of the mobile phone includes a lens (lens) 111 and a sensor (sensor) 112. When the mobile phone performs photographing, the lens 111 of the camera module 110 may obtain an optical signal corresponding to a photographed object in an image shooting scene. The sensor 112 of the camera module 110 may convert the optical signal passing through the lens 111 into an electrical signal, perform analog-to-digital (analogue-to-digital, A/D) conversion on the electrical signal, and output a corresponding digital signal to an intermediate processing module 120. The digital signal output by the sensor 112 to the intermediate processing module 120 is an original image shot by the camera module 110, where the original image may be referred to as a RAW image or a digital negative. The intermediate processing module 120 may perform a series of processing on the received RAW image, and finally obtain an image that can be displayed, for example, a JPEG image. The JPEG image may be transmitted to a display 130 of the mobile phone for display, and/or transmitted to a memory 140 of the mobile phone for storage.

Still refer to FIG. 1. A process in which the intermediate processing module 120 processes the RAW image to generate the JPEG image may include: performing image signal processing (image signal processing, ISP) on the RAW image; converting the image from a RAW domain to a YUV domain, where an image in the YUV domain may be referred to as a YUV image; then, processing the YUV image by using a YUV domain post-processing algorithm; and finally, encoding, in a JPEG encoding manner, a YUV image obtained through YUV domain processing, to obtain the JPEG image.

For example, the ISP processing may include bad pixel correction (bad pixel correction, DPC), RAW domain noise reduction, black level correction (black level correction, BLC), lens shading correction (lens shading correction, LSC), automatic white balance (auto white balance, AWB), demosica color interpolation, color correction (color correction matrix, CCM), dynamic range compression (dynamic range compression, DRC), gamma (gamma), 3D look up table (look up table, LUT), YUV domain noise reduction, sharpening (sharpen), detail enhancement (detail enhancement), and the like.

The YUV domain post-processing algorithm may include multi-frame registration, fusion, and noise reduction of a high-dynamic range (high-dynamic range, HDR) image, and a super resolution (super resolution, SR) algorithm, a face beautification algorithm, a distortion correction algorithm, and a blurring algorithm that are used for improving definition.

In the process in which the intermediate processing module 120 processes the RAW image to generate the JPEG image, some image processing algorithms in the YUV domain are migrated to the RAW domain, so that better image processing effects can be achieved. For example, image processing algorithms such as multi-frame registration, fusion, and noise reduction of the HDR in the YUV domain may be migrated to the RAW domain. Advantages of performing image processing in the RAW domain may include: A RAW image includes higher bit information than a YUV image; and because the RAW image does not undergo ISP, information such as colors and details is not damaged, and the like.

However, compared with image processing in the YUV domain, image processing in the RAW domain requires a larger amount of data, and has higher requirements on algorithm performance, memory, and the like. However, due to limited computing resources and memory resources of the terminal device, there are specified constraints on a manner in which some image processing algorithms in the YUV domain are migrated to in the RAW domain in the terminal device, which is prone to cause a problem of limited processing effects. For example, tailoring and adaption may need to be performed on some image processing algorithms based on computing power of the terminal device. Consequently, processing results of the image processing algorithms are not ideal.

Based on this, embodiments of this application provide an image processing method. In the method, a terminal device may upload, to a cloud, a captured RAW image that needs to be processed. The cloud may make full use of big data resources and computing resources to perform RAW domain image processing, ISP processing, and YUV domain processing on the RAW image, to obtain a final image in a first format, and return the final image to the terminal device.

The first format may include a JPEG format, a high efficiency image file format (high efficiency image file format, HEIF), or the like. The first format is not limited in this application.

According to the image processing method, a problem of limited processing effects caused by a fact that there are specified constraints in the terminal device when some image processing algorithms in a YUV domain are migrated to a RAW domain can be avoided; and the big data resources and the computing resources of the cloud can be fully utilized to perform RAW domain image processing, ISP processing, and YUV domain processing on the RAW image to achieve better image processing effects.

The following describes embodiments of this application in detail with reference to the accompanying drawings.

It should be noted that in description of this application, "at least one" means one or more, and "a plurality of" means two or more. Similarly, "a plurality of frames" refer to two or more frames. Words such as "first" and "second" are used only for distinguishing descriptions, and are not used to specifically limit a feature. The term "and/or" is used to describe an association relationship for describing associated objects and represents that three relationships may exist. For example, A and/or B may represent the following three cases: Only A exists, both A and B exist, and only B exists. The character "/" generally indicates an "or" relationship between the associated objects.

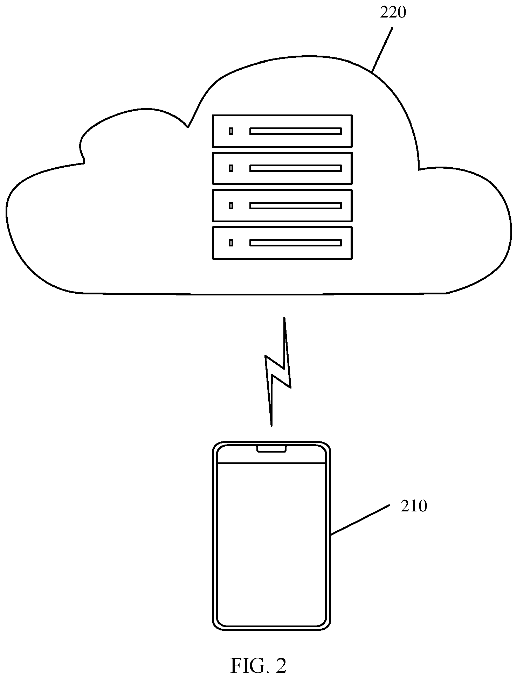

The image processing method provided in embodiments of this application may be applied to a device-cloud synergy system that includes a terminal device and a cloud. In device-cloud synergy, "device" is a terminal device, and "cloud" is a cloud. The cloud may also be referred to as a cloud server or cloud platform. For example, FIG. 2 is a schematic diagram of a structure of a device-cloud synergy system according to an embodiment of this application. As shown in FIG. 2, the device-cloud synergy system may include a terminal device 210 and a cloud 220. The terminal device 210 may be connected to the cloud 220 through a wireless network.

In an embodiment, the cloud 220 may be a computer server or a server cluster including a plurality of servers. An implementation architecture of the cloud 220 is not limited in this application. For a specific form of the terminal device 210, refer to the descriptions in the foregoing embodiment. Details are not described again.

Optionally, FIG. 2 shows an example of the terminal device 210. However, it should be understood that there may be one or a plurality of terminal devices 210 in the device-cloud synergy system. The plurality of terminal devices 210 may be the same or may be different. This is not limited herein. An image processing method provided in this embodiment of this application is a process in which each terminal device 210 interacts with the cloud 220 to implement image processing.

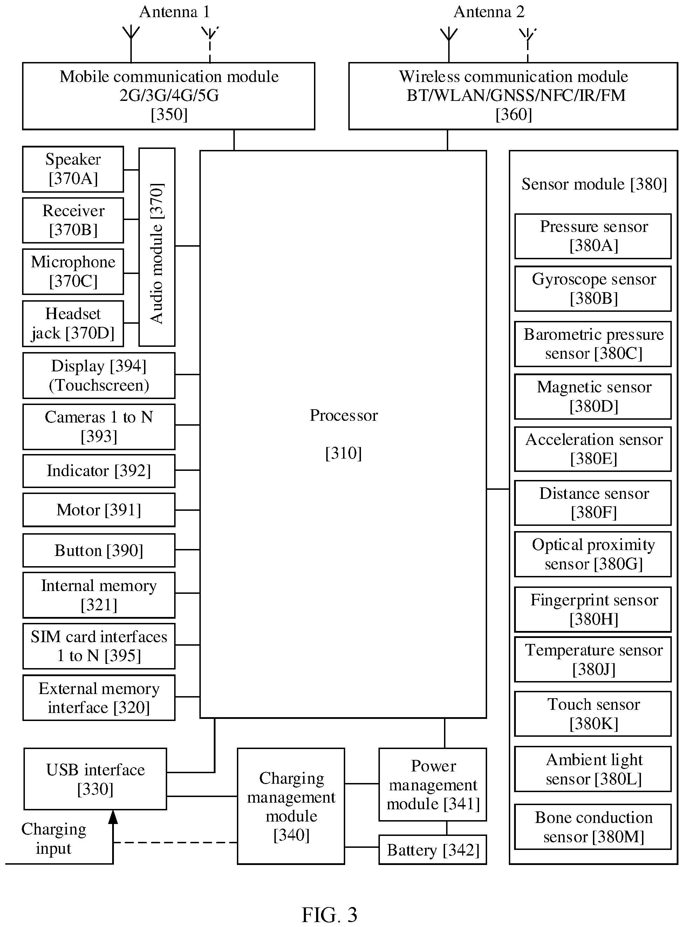

For example, the terminal device is a mobile phone. FIG. 3 is a schematic diagram of a structure of a terminal device according to an embodiment of this application. As shown in FIG. 3, the mobile phone may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal based on an instruction operation code and a time sequence signal, to complete control of instruction fetching and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The external memory interface 320 may be configured to connect to an external memory card, for example, a micro SD card, to extend a storage capability of the mobile phone. The external storage card communicates with the processor 310 through the external memory interface 320, to implement a data storage function. For example, files such as music and videos are stored in the external storage card.

The internal memory 321 may be configured to store computer-executable program code, and the executable program code includes instructions. The processor 310 executes various functional applications and data processing of the mobile phone by running instructions stored in the internal memory 321. The internal memory 321 may include a program storage area and a data storage area. The program storage area may store an operating system, an application required by at least one function (for example, a sound playing function or an image playing function), and the like. The data storage area may store data (for example, image data or a phone book) created when the mobile phone is used, and the like. In addition, the internal memory 321 may include a highspeed random access memory, and may further include a nonvolatile memory, for example, at least one magnetic disk storage device, a flash memory device, or a universal flash storage (universal flash storage, UFS).

The charging management module 340 is configured to receive a charging input from a charger. The charging management module 340 supplies power to the mobile phone by using the power management module 341 while charging the battery 342. The power management module 341 is configured to connect the battery 342, the charging management module 340, and the processor 310. The power management module 341 may also receive an input of the battery 342 to supply power to the mobile phone.

A wireless communication function of the mobile phone may be implemented through the antenna 1, the antenna 2, the mobile communication module 350, the wireless communication module 360, the modem processor, the baseband processor, and the like. The antenna 1 and the antenna 2 are configured to transmit and receive electromagnetic wave signals. Each antenna in the mobile phone may be configured to cover one or more communication frequency bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile phone may implement an audio function such as music playing or recording through the audio module 370, the speaker 370A, the receiver 370B, the microphone 370C, the headset jack 370D, the application processor, and the like.

The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

The camera 393 may include a plurality of types. For example, the camera 393 may include a long-focus camera, a wide-angle camera, an ultra-wide-angle camera, or the like that have different focal lengths. A field of view angle of the long-focus camera is small, and the long-focus camera is suitable for shooting a scene in a small range at a distance. The wide-angle camera has a large field of view. A field of view of the ultra-wide-angle camera is larger than that of the wide-angle camera, and the ultra-wide-angle camera can be configured to shoot a large-scale image such as a panoramic image. In some embodiments, the long-focus camera with a small field of view may rotate, so that scenes in different ranges may be photographed.

The mobile phone can capture a RAW image through the camera 393. For example, for a specific structure of the camera 393, refer to the camera module shown in FIG. 1. The camera module includes at least a lens and a sensor (sensor). When a photo or a video is shot, a shutter is opened, and light may be transmitted to the sensor through the lens of the camera 393. The sensor may convert an optical signal passing through the lens into an electrical signal, perform A/D conversion on the electrical signal, and output a corresponding digital signal. The digital signal is the RAW image. Subsequently, the RAW image may be converted into a visible image by performing subsequent RAW domain processing, ISP processing, and YUV domain processing on the RAW image.

In a possible design, a photosensitive element of the sensor may be a charge-coupled device (charge coupled device, CCD), and the sensor further includes an A/D converter. In another possible design, the photosensitive element of the sensor may be a complementary metal-oxide-semiconductor (complementary metal-oxide-semiconductor, CMOS).

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone may include one or N displays 394, where N is a positive integer greater than 1. For example, the display 394 may be configured to display a camera screen, a photo playing screen, and the like.

The mobile phone implements a display function by using the GPU, the display 394, the application processor, and the like. The GPU is a microprocessor for image processing, and is connected to the display 394 and the application processor. The GPU is configured to perform mathematical and geometric calculations, and render an image. The processor 310 may include one or more GPUs that execute program instructions to generate or change display information.

It may be understood that the structure shown in FIG. 3 do not constitute a specific limitation on the mobile phone. In some embodiments, the mobile phone may further include more or fewer components than those shown in FIG. 3, or some components may be combined, or some components may be split, or different component arrangements may be used. Alternatively, some components in FIG. 3 may be implemented in hardware, software, or a combination of software and hardware.

In addition, when the terminal device is another mobile terminal such as a tablet computer, a wearable device, an in-vehicle device, an AR/VR device, a laptop computer, a UMPC, a netbook, or a PDA, or is a professional image shooting device such as a digital camera, a single-lens reflex camera/mirrorless camera, a motion camera, a pan-tilt-zoom camera, and an uncrewed aerial vehicle. For specific structures of these other terminal devices, refer to FIG. 3. For example, components may be added to or reduced from these other terminal devices based on the structure shown in FIG. 3. Details are not described herein again.

It should be further understood that one or more photographing applications may run in the terminal device (for example, the mobile phone), to implement an image shooting function by running the photographing application. For example, the photographing application may include a system-level application: "camera" application. For another example, the photographing application may further include another application that is installed in the terminal device and that can be used for image shooting.

The following describes, by using an example in which the terminal device is a mobile phone and with reference to the device-cloud synergy system shown in FIG. 2, a process in which the mobile phone captures a RAW image during photographing and uploads a captured RAW image that needs to be processed to the cloud for image processing. It should be understood that an image processing process provided in the following embodiment is also applicable to a scenario in which another terminal device having a photographing function interacts with a cloud.

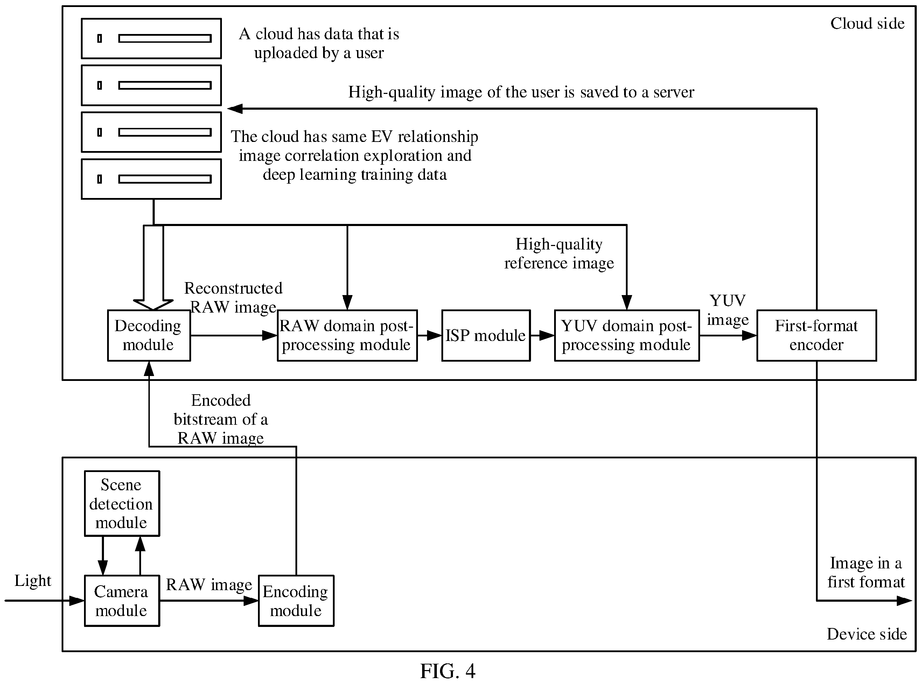

FIG. 4 is a schematic diagram of interaction between a mobile phone and a cloud according to an embodiment of this application. A device side indicates a mobile phone side, and a cloud side indicates a cloud side. As shown in FIG. 4, in this embodiment of this application, a mobile phone may include at least a camera module and an encoding module. When a user uses the mobile phone to take a picture, the mobile phone may capture a RAW image through the camera module. Then, the mobile phone may encode, through the encoding module, the RAW image captured by the camera module to obtain an encoded bitstream corresponding to the RAW image, and upload the encoded bitstream corresponding to the RAW image to the cloud.

The cloud may include at least a decoding module, a RAW domain post-processing module, an ISP module, a YUV domain post-processing module, and a first-format encoder. The cloud may decode, through the decoding module, the encoded bitstream corresponding to the RAW image from the mobile phone, to obtain a reconstructed RAW image. The RAW domain post-processing module, the ISP module, and the YUV domain post-processing module may sequentially perform RAW domain image processing, ISP processing, and YUV domain image processing on the reconstructed RAW image, and the YUV domain post-processing module outputs a frame of YUV image. The first-format encoder may encode, in a first format, the YUV image output by the YUV domain post-processing module, to finally obtain an image (for example, a JPEG image) in the first format. Then, the cloud may send the image in the first format back to the mobile phone. Therefore, the mobile phone may store the image in the first format in a gallery or present the image to the user.

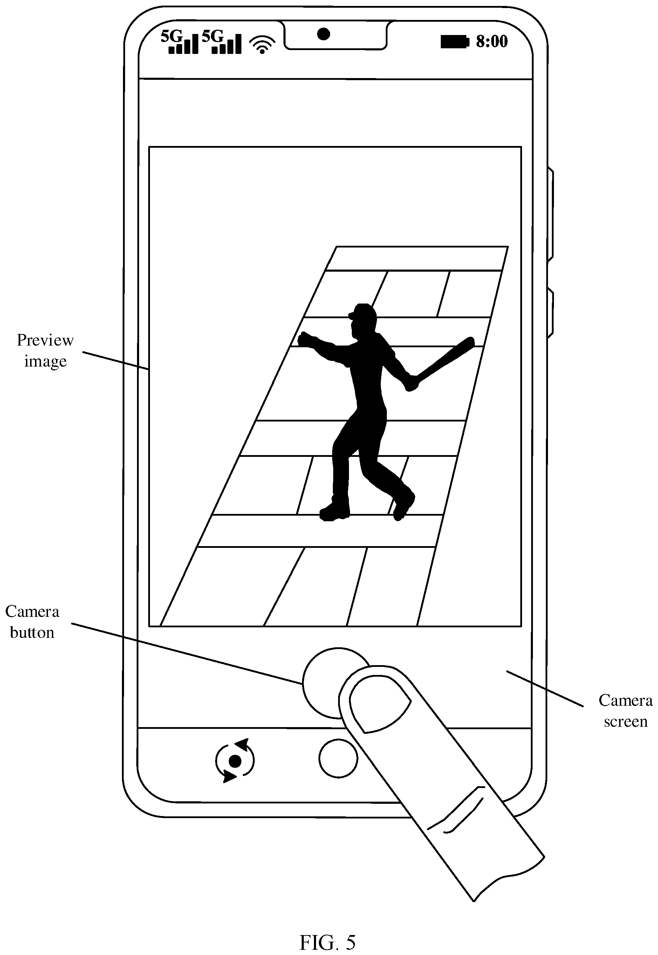

For example, before taking a picture by using the mobile phone, the user may first start a photographing application of the mobile phone. For example, the user may tap or touch an icon of a camera on the mobile phone, and the mobile phone may start and run the camera in response to a tap or touch operation performed by the user on the icon of the camera (or, the user may start the camera by using a voice assistant, which is not limited). After starting and running the photographing application, the mobile phone presents a camera screen to the user. In addition, the mobile phone further obtains a preview image corresponding to a current photographing scene, and displays the preview image in the camera screen. For example, FIG. 5 is a schematic diagram of a camera screen according to an embodiment of this application. As shown in FIG. 5, when a photographing application of a mobile phone starts, the camera screen presented by the mobile phone to the user may include at least a preview image and a camera button.

A process of obtaining the preview image is similar to the photographing principle shown in FIG. 1. For example, the mobile phone may capture, through a camera module, a RAW image corresponding to a current photographing scene. Then, an ISP module, a YUV domain post-processing module, and the like of the mobile phone (the structure such as the ISP module and the YUV domain post-processing module of the mobile phone is not shown in FIG. 4) may be configured to process the RAW image, to obtain the preview image that can be displayed in the camera screen. Optionally, compared with that in a photographing process, in a process in which the mobile phone obtains the preview image, processing on the RAW image is simpler. For example, only simple ISP processing may be performed on the RAW image to obtain a YUV image. Then, the YUV image is directly converted into a preview image in an RGB format and is displayed in the camera screen, where JEPG encoding is not required for the YUV image.

It may be understood that in the camera screen shown in FIG. 5, a camera button may be essentially a functional control displayed in the camera screen. When a user uses a mobile phone to take a picture, the user may tap or touch the functional control, and the mobile phone may capture a RAW image through the camera module in response to a tap or touch operation of the user on the functional control of the camera button. Alternatively, in some other implementations, a function of the camera button may be implemented by using another physical button on the mobile phone. This is not limited.

Optionally, in this embodiment of this application, the mobile phone further has a scene detection function. That the mobile phone captures the RAW image through the camera module may be: The mobile phone first detects a current photographing scene by using the scene detection function, and determines an image output requirement of a sensor in the camera module based on detection of the current photographing scene. Then, the mobile phone captures the RAW image through the camera module according to the image output requirement of the sensor.

For example, in a process in which the user opens a photographing application of the mobile phone to perform photographing, when the mobile phone detects that a current photographing scene is a high dynamic range scene (namely, an HDR scene), it may be determined that the sensor needs to output a plurality of frames of RAW images with different exposure values (exposure values, EVs), to perform multi-frame fusion to generate a high dynamic image. Then, the mobile phone may capture, through the camera module, the plurality of frames of RAW images with different EVs according to the image output requirement of the sensor that is determined based on the scene detection. The mobile phone may configure different exposures and different sensitivity (the sensitivity may be represented by using an ISO value) for the camera module, to meet an EV value requirement corresponding to each frame of RAW image. In other words, in the HDR scene, the sensor needs to output a plurality of frames of RAW images with different exposures and different ISOs.

For another example, in a process in which the user opens a photographing application of the mobile phone to perform photographing, when the mobile phone detects that a current photographing scene is a low light scene, it may be determined that the sensor needs to output a plurality of frames of images with different exposure values and ISOs, to perform multi-frame fusion and noise reduction. Then, the mobile phone may alternatively capture, through the camera module, a plurality of frames of RAW images with different exposure values and ISOs according to the image output requirement of the sensor that is determined based on the scene detection.

For another example, in a process in which the user opens a photographing application of the mobile phone to perform photographing, when the mobile phone detects that a current photographing scene is an insufficient depth of field scene, it may be determined that the sensor needs to output a plurality of frames of images at different focus distances, to perform multi-frame fusion and extend depth of field (extend depth of field, EDOF). Then, the mobile phone may capture, through the camera module, a plurality of frames of RAW images at different focus distances according to the image output requirement of the sensor that is determined based on the scene detection.

It may be understood that the foregoing descriptions in which the mobile phone detects the current photographing scene and determines the image output requirement of the sensor in the camera module based on detection of the current photographing scene are all examples. This is not limited in this embodiment of this application.

For example, still refer to FIG. 4. The scene detection function of the mobile phone may be implemented by deploying a scene detection module in the mobile phone. Optionally, the scene detection module may be a program module (or an algorithm unit) in the mobile phone.

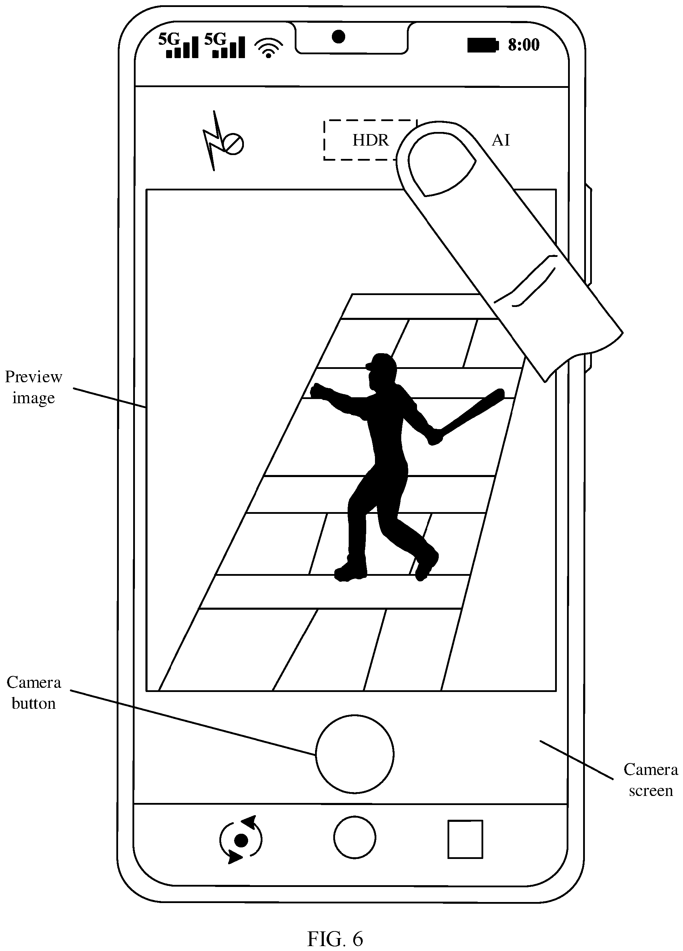

In some embodiments, the scene detection module may detect a photographing scene selected by the user in a photographing application as the current photographing scene. For example, FIG. 6 is another schematic diagram of a camera screen according to an embodiment of this application. As shown in FIG. 6, after a user opens a photographing application of a mobile phone, the mobile phone may provide the camera screen shown in FIG. 6. The camera screen displays a preview image corresponding to a current photographing scene. The preview image is an image that is of the current photographing scene and that is captured by a camera module in real time (for a capturing process, refer to the foregoing embodiment). In addition, the camera screen further includes a functional control corresponding to at least one scene, for example, a functional control HDR shown in FIG. 6. When the user taps or touches the functional control HDR in the camera screen shown in FIG. 6, a scene detection module of the mobile phone may detect a tap or touch operation performed by the user on the functional control HDR, and determine, in response to the tap operation, that the current photographing scene is an HDR scene, so that it is determined that a sensor needs to output a plurality of frames of images with different exposures and different sensitivity, to perform multi-frame fusion to generate a high-dynamic image. Then, when the user taps or touches a functional control of a camera button, in response to the tap or touch operation performed by the user on the functional control of the camera button and according to an image output requirement that the sensor needs to output the plurality of frames of images with different exposures and different sensitivity, the mobile phone may capture a plurality of frames of RAW images with different exposures and different ISOs through the camera module.

In some other embodiments, the scene detection module may alternatively determine the current photographing scene based on sensor data of the mobile phone and/or the preview image captured by the camera module. For example, after the mobile phone starts and runs the photographing application, the scene detection module may determine, based on data captured by an ambient light sensor and/or based on the preview image captured by the camera module, that the current photographing scene is a low light scene, and determine that the sensor needs to output a plurality of frames of images with different exposures and different ISOs, to perform multi-frame fusion and noise reduction. Then, when the user taps or touches the functional control of the camera button (for the camera button, refer to FIG. 5 or FIG. 6), in response to the tap or touch operation performed by the user on the functional control of the camera button and according to the image output requirement that the sensor needs to output the plurality of frames of images with different exposures and different sensitivity, the mobile phone may capture the plurality of frames of RAW images with different exposures and different ISOs through the camera module.

For another example, after the mobile phone starts and runs the photographing application, the scene detection module may determine, based on a proportion of an overexposed area and/or an underexposed area in the preview image captured by the camera module, whether the current photographing scene is the HDR scene. For example, if the proportion of the overexposed area is greater than a specified threshold, it is determined that the current photographing scene is the HDR scene. For example, the threshold may be 60%, 70%, or the like. This is not limited herein. When the scene detection module determines that the current photographing scene is the HDR scene, it may be determined that the sensor needs to output a plurality of frames of images with different exposures and sensitivity, to perform multi-frame fusion to generate a high-dynamic image. Then, when the user taps or touches the functional control of the camera button, in response to the tap or touch operation performed by the user on the functional control of the camera button and according to the image output requirement that the sensor needs to output the plurality of frames of images with different exposures and different sensitivity, the mobile phone may capture the plurality of frames of RAW images with different exposures and different ISOs through the camera module. Specific implementation of the scene detection module is not limited in this application.

Optionally, if the scene detection module detects that the current photographing scene is a common scene (that is, the current photographing scene is not a special scene such as the HDR scene, the low light scene, or the insufficient depth of field scene), it may be determined that the sensor needs to output one frame of image. Then, when the user performs photographing by using the mobile phone, the mobile phone may capture one frame of RAW image through the camera module according to the foregoing image output requirement of the sensor.

It can be learned from the foregoing that, on the whole, in this embodiment of this application, that the mobile phone captures the RAW image through the camera module may include two scenarios: capturing one frame of RAW image and capturing a plurality of frames of RAW images.

In some embodiments, that the mobile phone encodes, through the encoding module, the RAW image captured by the camera module to obtain an encoded bitstream corresponding to the RAW image, and uploads the encoded bitstream corresponding to the RAW image to a cloud may mean: Regardless of whether the camera module captures one frame of RAW image or a plurality of frames of RAW images, the mobile phone encodes the RAW image captured by the camera module to obtain an encoded bitstream corresponding to the RAW image, and uploads the encoded bitstream corresponding to the RAW image to the cloud.

That is, in this embodiment, regardless of whether the camera module captures one frame of RAW image or a plurality of frames of RAW images, the mobile phone uploads the RAW image captured by the camera module to the cloud for processing.

In some other embodiments, that the mobile phone encodes, through the encoding module, the RAW image captured by the camera module to obtain an encoded bitstream corresponding to the RAW image, and uploads the encoded bitstream corresponding to the RAW image to a cloud may alternatively mean: If the camera module captures a plurality of frames of RAW images, the mobile phone encodes, through the encoding module, the plurality of frames of RAW images captured by the camera module to obtain an encoded bitstream corresponding to the plurality of frames of RAW images, and uploads the encoded bitstream corresponding to the plurality of frames of RAW images to the cloud. If the camera module captures one frame of RAW image, the mobile phone directly performs ISP processing and YUV domain image processing on the frame of RAW image in sequence through an ISP module and a YUV domain post-processing module of the mobile phone (namely, a mobile phone side). The YUV domain post-processing module outputs a frame of YUV image. Then, the mobile phone may encode, in a first format through a first-format encoder of the mobile phone, the YUV image output by the YUV domain post-processing module, to finally obtain an image (for example, a JPEG image) in the first format. Therefore, the mobile phone may store the image in the first format in a gallery or present the image to the user. Specifically, for a process of processing the one frame of RAW image, refer to the process shown in FIG. 1. Details are not described again.

To be specific, in this embodiment, the mobile phone may automatically determine, with reference to a photographing scene corresponding to the RAW image captured by the camera module, whether the RAW image captured by the camera module needs to be uploaded to the cloud for processing. The mobile phone uploads the RAW image captured by the camera module to the cloud for processing only when the camera module captures the plurality of frames of RAW images.

In still some embodiments, the mobile phone may further have a function that the user may select whether to upload the RAW image captured by the camera module to the cloud for processing. For example, after the mobile phone starts and runs a photographing application, a functional control for selecting whether to upload the RAW image captured by the camera module to the cloud for processing may alternatively be provided on a camera screen for the user. The user may perform an operation on the functional control to actively select whether to upload the RAW image captured by the camera module to the cloud for processing. The mobile phone may determine, according to a selection of the user, whether to upload the RAW image captured by the camera module to the cloud for processing.

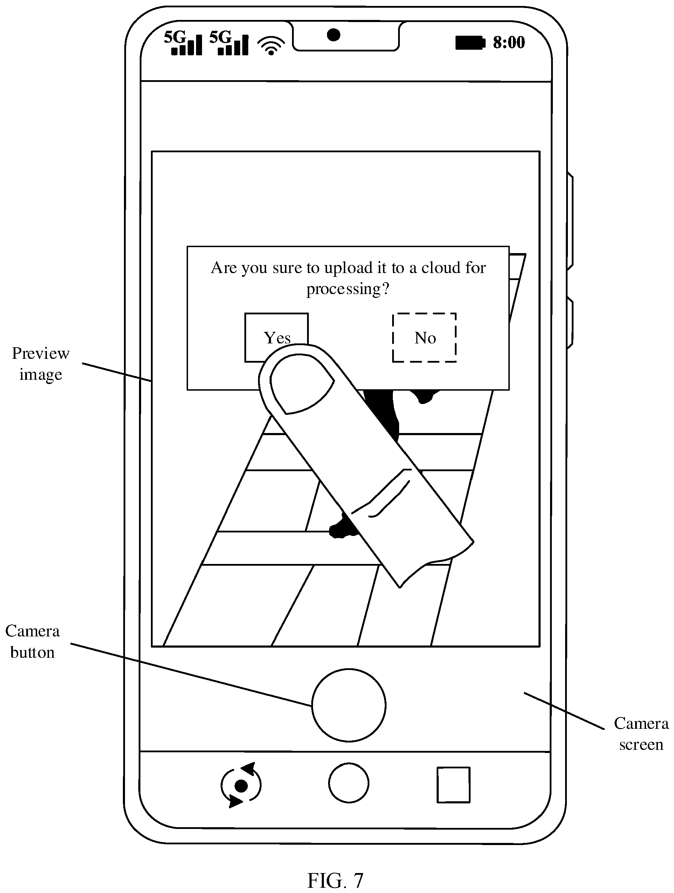

For example, FIG. 7 is still another schematic diagram of a camera screen according to an embodiment of this application. As shown in FIG. 7, in an implementation, when a mobile phone starts and runs a photographing application, prompt information shown in FIG. 7 may further pop up in the camera screen provided by the mobile phone: "Are you sure to upload it to a cloud for processing?" In addition, two functional controls, namely, "Yes" and "No", are displayed in an area below the prompt information on the camera screen. When a user taps or touches the functional control "Yes", the mobile phone may determine, in response to a tap or touch operation performed by the user on the functional control "Yes", that the RAW image captured by the camera module needs to be uploaded to the cloud for processing. Therefore, in a subsequent photographing process, after the mobile phone captures the RAW image through the camera module in response to a tap or touch operation of the user on a functional control of a camera button, the mobile phone may encode, through the encoding module, the RAW image captured by the camera module to obtain an encoded bitstream corresponding to the RAW image, and upload the encoded bitstream corresponding to the RAW image to the cloud. Alternatively, when a user taps or touches the functional control "No", the mobile phone may determine, in response to a tap or touch operation performed by the user on the functional control "No", that the RAW image captured by the camera module does not need to be uploaded to the cloud for processing. Therefore, in a subsequent photographing process, after capturing the RAW image through the camera module in response to a tap or touch operation of the user on a functional control of a camera button, the mobile phone directly processes the RAW image captured by the camera module on the mobile phone (namely, a mobile phone side). For a specific processing process, refer to FIG. 1.

Optionally, the prompt information and the functional controls "Yes" and "No" shown in FIG. 7 are displayed only each time the mobile phone starts and runs the photographing application, so that the user can make a selection. After the user selects "Yes" or "No", the prompt information and the functional controls "Yes" and "No" on the camera screen disappear, and the user may continue to take a picture by using the mobile phone. Alternatively, if the user does not make a selection in a specified period of time (for example, 3 seconds, 5 seconds, 8 seconds, or the like), the mobile phone may select "Yes" or "No" by default, and the prompt information and the functional controls "Yes" and "No" are no longer displayed.

Optionally, the prompt information and the functional controls "Yes" and "No" shown in FIG. 7 are merely examples for description. In another implementation, the prompt information may alternatively be "Are you sure to upload it to the cloud for processing to obtain better image quality?", "Do you take a picture with the cloud?", or the like. The functional control "Yes" may alternatively be replaced with "OK", the functional control "No" may alternatively be replaced with "Cancel", or the like. This is not limited in this application. In addition, a display area of the prompt information and the functional controls "Yes" and "No" in the camera screen is not limited in this application.

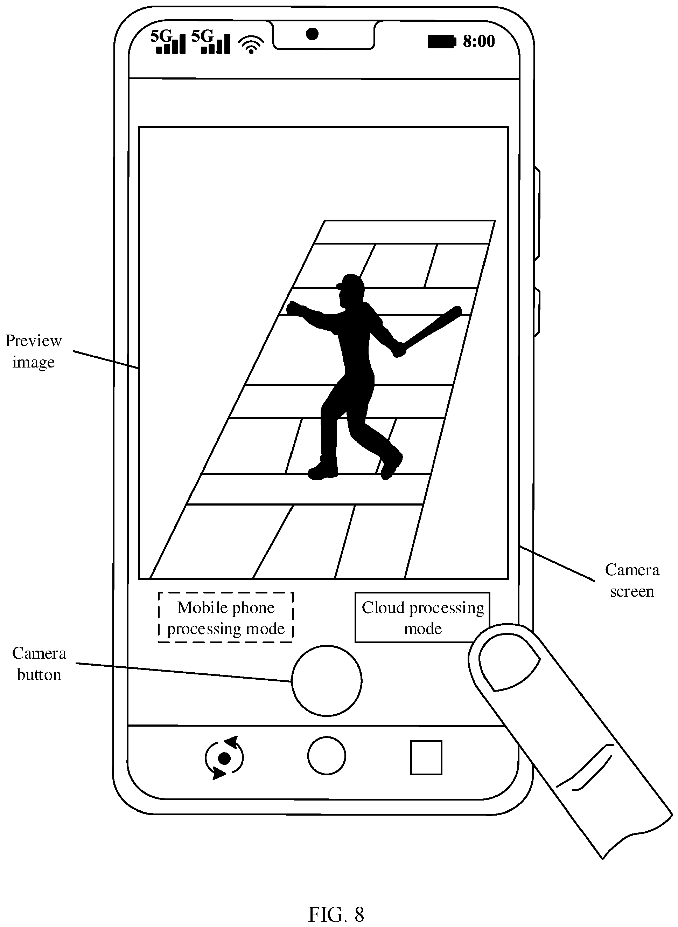

For example, FIG. 8 is yet another schematic diagram of a camera screen according to an embodiment of this application. As shown in FIG. 8, in another implementation, when a mobile phone starts and runs a photographing application, two functional controls may be further displayed at a bottom of a preview image in the camera screen provided by the mobile phone: "Mobile phone processing mode" and "Cloud processing mode". Before tapping or touching a functional control of a camera button to take a picture, a user may first tap or touch the functional control "Mobile phone processing mode" or the functional control "Cloud processing mode" for making a selection. When the user taps or touches the functional control "Cloud processing mode", the mobile phone may determine, in response to a tap or touch operation performed by the user on the functional control "Cloud processing mode", that a RAW image captured by a camera module needs to be uploaded to a cloud for processing. Therefore, in a subsequent photographing process, after the mobile phone captures the RAW image through the camera module in response to the tap or touch operation of the user on the functional control of the camera button, the mobile phone may encode, through the encoding module, the RAW image captured by the camera module to obtain an encoded bitstream corresponding to the RAW image, and upload the encoded bitstream corresponding to the RAW image to the cloud. When the user taps or touches the functional control "Mobile phone processing mode", the mobile phone may determine, in response to a tap or touch operation performed by the user on the functional control "Mobile phone processing mode", that a RAW image captured by a camera module does not need to be uploaded to a cloud for processing. Therefore, in a subsequent photographing process, after capturing the RAW image through the camera module in response to the tap or touch operation of the user on the functional control of the camera button, the mobile phone directly processes the RAW image captured by the camera module on the mobile phone (namely, a mobile phone side). For a specific processing process, refer to FIG. 1.

Optionally, the functional controls "Mobile phone processing mode" and "Cloud processing mode" shown in FIG. 8 may be displayed for the user to select only each time the mobile phone starts and runs the photographing application. If the user does not make a selection in a specified period of time (for example, 3 seconds, 5 seconds, 8 seconds, or the like), the mobile phone can select the "Mobile phone processing mode" or the "Cloud processing mode" by default, and the functional controls "Mobile phone processing mode" and "Cloud processing mode" are no longer displayed.

Alternatively, the functional controls "Mobile phone processing mode" and "Cloud processing mode" shown in FIG. 8 may be continuously displayed in the camera screen for the user to make a selection. This is not limited herein. Similarly, in a scenario in which the functional controls "Mobile phone processing mode" and "Cloud processing mode" are always displayed, if the user does not make any selection within a specific period of time, the mobile phone may also select the "Mobile phone processing mode" or the "Cloud processing mode" by default. In this scenario, if the user has selected the "Mobile phone processing mode", the user may alternatively select the "Cloud processing mode" again subsequently for switching. Similarly, the user can switch from the "Cloud processing mode" to the "Mobile phone processing mode".

In addition, the functional controls "Mobile phone processing mode" and "Cloud processing mode" shown in FIG. 8 are merely examples for description. For example, in another implementation, the "Mobile phone processing mode" may alternatively be replaced with a "local mode", and the "Cloud processing mode" may alternatively be replaced with a "cloud mode". This is not limited in this application. Similarly, display areas of the functional controls "Mobile phone processing mode" and "Cloud processing mode" in the camera screen are not limited in this application.

In still some embodiments, a condition for determining whether the mobile phone uploads the RAW image captured by the camera module to the cloud for processing described in the foregoing embodiment may also be partially combined. For example, first as shown in FIG. 7 or FIG. 8, the mobile phone may determine, in response to an active selection operation of the user, whether the RAW image captured by the camera module needs to be uploaded to the cloud for processing. After the mobile phone determines that the RAW image captured by the camera module needs to be uploaded to the cloud for processing, in a subsequent photographing process, the mobile phone may further capture, according to a scenario in which the camera module captures the RAW image, only when the camera module captures a plurality of frames of RAW images, the RAW image captured by the camera module is uploaded to the cloud for processing. If the camera module captures one frame of RAW image, the image is processed locally on the mobile phone. If the mobile phone determines, in response to the active selection operation of the user, that the RAW image captured by the camera module does not need to be uploaded to the cloud for processing, in a subsequent photographing process, the image is processed locally on the mobile phone whether the camera module captures the plurality of frames of RAW images or the one frame of RAW image.

In this embodiment of this application, the foregoing operation that the user chooses to upload the RAW image to the cloud for processing may be referred to as a first selection operation. For example, the operation in which the user selects the functional control "Yes" in FIG. 7, the operation in which the user selects the "Cloud processing mode" shown in FIG. 8, and the like.

The following uses an example in which a sensor of a camera module outputs a plurality of frames of RAW images to describe a process in which the mobile phone encodes, through an encoding module, the plurality of frames of RAW images captured by the camera module, and a process in which the cloud decodes, through a decoding module, an encoded bitstream corresponding to the RAW images. It may be understood that when the sensor of the camera module outputs one frame of RAW image, for a process in which the mobile phone encodes, through the encoding module, the one frame of RAW image captured by the camera module, and for a process in which the cloud decodes, through the decoding module, the encoded bitstream corresponding to the RAW image, refer to a process of each frame of RAW image when the sensor outputs the plurality of frames of RAW images. This is not described herein.

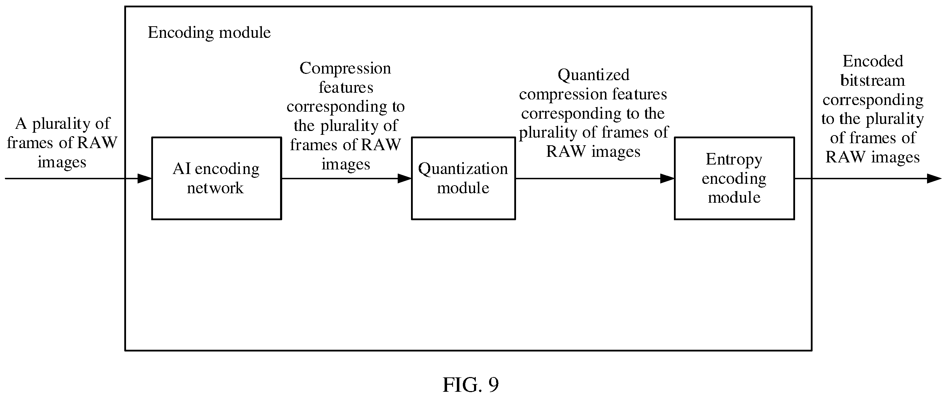

FIG. 9 is a schematic diagram of an encoding module according to an embodiment of this application. As shown in FIG. 9, in a possible design, the encoding module of a mobile phone includes an artificial intelligence (artificial intelligence, AI) encoding network, a quantization module, and an entropy encoding module. After capturing a plurality of frames of RAW images, a camera module may first input the plurality of frames of RAW images to the AI encoding network. The AI encoding network may perform AI encoding on the plurality of frames of RAW image, and output compression features corresponding to the plurality of frames of RAW images to the quantization module. The quantization module may quantize the compression features corresponding to the plurality of frames of RAW images, for example, may convert a floating-point number in the compression features corresponding to the plurality of frames of RAW images into a binary number or an integer. The entropy encoding module may perform entropy encoding on compression features corresponding to the plurality of frames of RAW images that are quantized by the quantization module, to finally obtain an encoded bitstream corresponding to the plurality of frames of RAW images. That is, the encoding module outputs bitstreams corresponding to the plurality of frames of RAW images.

For example, coding manners of the entropy encoding module may include: Shannon (shannon) coding, Huffman (huffman) coding, arithmetic coding (arithmetic coding), and the like. This is not limited herein.

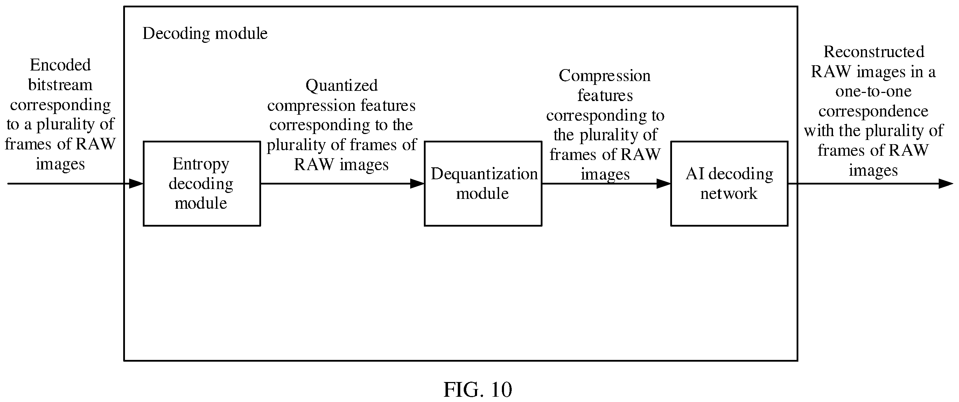

FIG. 10 is a schematic diagram of a decoding module according to an embodiment of this application. As shown in FIG. 10, corresponding to an encoding module of a mobile phone, in this design, the decoding module of a cloud includes an entropy decoding module, a dequantization module, and an AI decoding network. After receiving an encoded bitstream corresponding to a plurality of frames of RAW images from the mobile phone, the cloud may first input the encoded bitstream corresponding to the plurality of frames of RAW images into the entropy decoding module. The entropy decoding module may perform entropy decoding on the encoded bitstream corresponding to the plurality of frames of RAW images in a manner opposite to that of an entropy encoding module of the mobile phone, to obtain quantized compression features corresponding to the plurality of frames of RAW images, and output the compression features to the dequantization module. The dequantization module may dequantize, in a manner opposite to that of the quantization module of the mobile phone, the quantized compression features corresponding to the plurality of frames of RAW images that are output by the entropy decoding module, to obtain the compression features corresponding to the plurality of frames of RAW images, and output the compression features to the AI decoding network. The AI decoding network may perform AI decoding on the compression features corresponding to the plurality of frames of RAW images, and output reconstructed RAW images corresponding to the plurality of frames of RAW images in a one-to-one correspondence.

For example, the AI encoding network and the AI decoding network may be a convolutional neural network (convolutional neural network, CNN), a recurrent neural network (recurrent neural network, RNN), or the like. This is not limited herein.

Optionally, there may be a plurality of formats of the RAW image output by a sensor of the camera module, for example, a Bayer array (Bayer pattern), a Foveon X3, and a Fuji X-E3. The following uses an RGGB Bayer pattern format as an example. In this design, a process in which the AI encoding network performs AI encoding on the plurality of frames of RAW images is described by using an example.

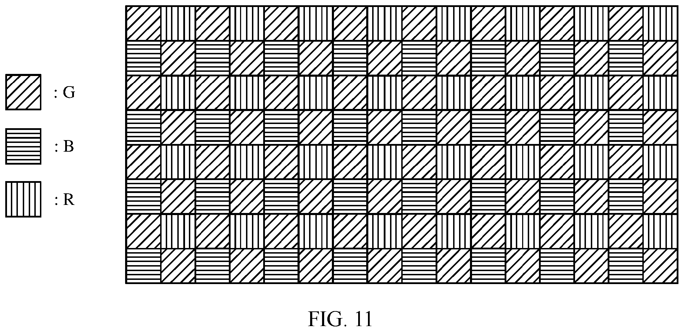

FIG. 11 is a schematic diagram of RGGB format arrangement of a RAW image. For specific RGGB format arrangement of each frame of RAW image output by a sensor of a camera module, refer to FIG. 11. R represents a red (red) component, G represents a green (green) component, and B represents a blue (blue) component. For example, in FIG. 11, different filling patterns are used to indicate information about an R component, a G component, or a B component included in each pixel.

For the RAW image arranged in an RGGB format shown in FIG. 11, an AI encoding network may respectively extract locations corresponding to four components R, G, G, and B in each frame of RAW image to form four new sub-images that respectively include all R components, all G components in an upper left corner, all B components, and all G components in a lower right corner, so that intra-frame correlation (or referred to as spatial correlation) for an image interior and between the components may be learned. The RAW image is compressed based on the intra-frame correlation for an image interior and between the components, and a compression feature corresponding to each frame of RAW image is output.

For example, it is assumed that a mobile phone detects that a current photographing scene is an HDR scene, and the camera module captures eight frames of RAW images with different EV values, for example: EV values of the eight frames of RAW images are EV-0, EV-0, EV-0, EV-0, EV-0, EV-2, EV-4, and EV-2 respectively. Then, the camera module may input the foregoing eight frames of RAW images to the AI encoding network. The AI encoding network can convert each frame of RAW image into data streams of four channels: R, G, G, and B respectively. Each frame of RAW image corresponds to four channels, and the eight frames of RAW images correspond to 32 (4 x 8 = 32) channels. Therefore, the AI encoding network can output data streams of w/2 x h/2 x 32 channels, where w indicates widths of the RAW images, and h indicates heights of the RAW images, and 32 indicates a quantity of channels. The data streams of the w/2 x h/2 x 32 channels are compression features corresponding to the eight frames of RAW images.

A process in which an AI decoding network performs AI decoding on compression features corresponding to a plurality of frames of RAW images is opposite to the AI encoding process, that is, the AI decoding network is a reverse network of the AI encoding network. For example, a cloud receives an encoded bitstream corresponding to the eight frames of RAW images from the mobile phone, and performs entropy decoding and dequantization on the encoded bitstream corresponding to the eight frames of RAW images, to obtain the data streams of the w/2 x h/2 x 32 channels. The AI decoding network may perform AI decoding on the data streams of the w/2 x h/2 x 32 channels to obtain a reconstructed image of w/2 x h/2 x 32. After the reconstructed image of w/2 x h/2 x 32 is reordered according to an arrangement structure of an RGGB channel, eight frames of reconstructed RAW images of w*h may be obtained.

After obtaining the eight frames of reconstructed RAW images through a decoding module, the cloud may sequentially perform subsequent image processing through a RAW domain post-processing module, an ISP module, and a YUV domain post-processing module to obtain one frame of YUV image, and send the YUV image to a first-format encoder. The first-format encoder may encode the YUV image in a first format, to finally obtain an image (for example, a JPEG image) in the first format. Then, the cloud may send the image in the first format back to the mobile phone. Therefore, the mobile phone may store the image in the first format in a gallery or present the image to a user.

In an implementation, after the cloud obtains the eight frames of reconstructed RAW images through the decoding module, a process in which the cloud sequentially performs subsequent image processing through the RAW domain post-processing module, the ISP module, and the YUV domain post-processing module to obtain one frame of YUV image may be: The eight frames of reconstructed RAW images are fused into one frame of RAW image through the RAW domain post-processing module, and then the fused one frame of RAW image is input to the ISP module. The ISP module performs a series of ISP processing on the one frame of RAW image to obtain one frame of YUV image and input the YUV image to the YUV domain post-processing module. The YUV domain post-processing module performs SR, skin beautification, distortion correction, and blurring processing on the one frame of YUV image, and finally obtains a processed YUV image.

In another implementation, the foregoing multi-frame fusion processing may also be completed in a YUV domain, that is, output of the RAW domain post-processing module is eight frames of processed RAW images, and the eight frames of processed RAW images are input to the ISP module. Then the ISP module can perform a series of ISP processing on the eight frames of processed RAW images to obtain corresponding eight frames of YUV images and input the eight frames of YUV images to the YUV domain post-processing module. The YUV domain post-processing module may first fuse the eight frames of YUV images into one frame of YUV image, and then perform processing such as SR, skin beautification, distortion correction, and blurring on the fused frame of YUV image, to finally obtain a processed YUV image.

Optionally, both the AI encoding network and the AI decoding network are obtained by training a neural network (such as the CNN and the RNN) based on sample training data. The sample training data may include a sample RAW image and a sample reconstructed RAW image corresponding to the sample RAW image. The sample RAW image may be a RAW image output by the sensor of the camera module in different scenarios. The sample reconstructed RAW image is obtained after ISP processing, YUV domain processing, and first-format encoding are first performed on the sample RAW image to obtain the image in the first format, and then degradation and inversion opposite to the foregoing processing process are performed on the image in the first format. When the AI encoding network and the AI decoding network are trained, the sample RAW image may be used as input of the AI encoding network, and the sample reconstructed RAW image is used as output of the AI decoding network (output of the AI encoding network is input of the AI decoding network) for training.

In addition, a loss between the input of the AI encoding network and the output of the AI decoding network may be further calculated according to a loss function, and parameters (for example, a weight of neurons) of the AI encoding network and the AI decoding network may be optimized. An optimization objective is to minimize the loss between the input of the AI encoding network and the output of the AI decoding network.

In this embodiment of this application, the input of the AI encoding network is a RAW image, and the output of the AI decoding network is a reconstructed RAW image. When the loss between the input of the AI encoding network and the output of the AI decoding network is calculated, the RAW image input to the AI encoding network may be first sequentially processed through the RAW domain post-processing module, the ISP module, and the YUV domain post-processing module of the cloud to obtain a corresponding YUV image (The YUV image is referred to as an input YUV image in the following), and the reconstructed RAW image output by the AI decoding network is sequentially processed through the RAW domain post-processing module, the ISP module, and the YUV domain post-processing module of the cloud to obtain a corresponding reconstructed YUV image. Then, a loss between the input YUV image and the reconstructed YUV image is calculated as the loss between the input of the AI encoding network and the output of the AI decoding network. Therefore, a principle of optimizing the parameters of the AI encoding network and the AI decoding network may be that the loss between the input YUV image and the reconstructed YUV image is as small as possible.

Optionally, when the loss between the input of the AI encoding network and the output of the AI decoding network is calculated, the RAW image input to the AI encoding network may be the sample RAW image (which may be referred to as a first sample RAW image) in the sample training data, or may be another sample RAW image (which may be referred to as a second sample RAW image).

For example, the loss function may include a peak signal-to-noise ratio (peak signal-to-noise ratio, PSNR), structural similarity (structural similarity, SSIM), a minimum absolute error loss function (least absolute error-loss, L1-loss), and the like. An optimizer algorithm for optimizing parameters of the AI encoding network and the AI decoding network may include a stochastic gradient descent (stochastic gradient descent, SGD), a batch gradient descent (batch gradient descent, BGD), or the like.

The following uses the PSNR and the SSIM as examples to describe a process of calculating the loss between the input of the AI encoding network and the output of the AI decoding network in this embodiment of this application.

It is assumed that the input YUV image obtained after image processing is performed by the RAW domain post-processing module, the ISP module, and the YUV domain post-processing module on the RAW image input to the AI encoding network is *ori*, and a size of the input YUV image is m $*$ n, that is, *ori* includes m $*$ n pixels. For the foregoing RAW image input to the AI encoding network, a reconstructed YUV image obtained after image processing is performed by the RAW domain post-processing module, the ISP module, and the YUV domain post-processing module on a reconstructed RAW image finally output by the AI decoding network is *rec,* and a size of the reconstructed YUV image is also m $*$ n, that is, *rec* includes m $*$ n pixels, and both m and *n* are integers greater than 0. In this case, a PSNR between *ori* and *rec* may be calculated by using the following steps (1) and (2).

(1) First calculate a mean-square error (mean-square error, MSE) between *ori* and *rec* by using the following formula (1).

$$MSE = \frac{1}{mn} \sum_{i=0}^{m-1} \sum_{j=0}^{n-1} [ori(i,j) - rec(i,j)]^2 \qquad (1)$$

*MSE* represents the mean-square error between *ori* and *rec,* m represents widths of *ori* and *rec, n* represents heights of *ori* and *rec,* (*i,j*) represents coordinates a pixel in *ori* or *rec,* and *ori(i,j)* represents a pixel value of the pixel (i,j).

(2) Then, based on the mean-square error between *ori* and *rec,* calculate the PSNR between *ori* and *rec* by using the following formula (2).

$$PSNR = 10 \log_{10} \left( \frac{MAX_I^2}{MSE} \right) \qquad (2)$$

*MAX,* is a possible maximum pixel value of *ori* and *rec.* For example, if each pixel is represented by an 8-bit valid bit, the value *MAX,* is 255.

A larger PSNR value between *ori* and *rec* indicates a smaller distortion of *rec* relative to *ori*, namely, a smaller loss between *ori* and *rec.*

The SSIM between *ori* and *rec* may be calculated by using the following formula (3).

$$SSIM(ori,rec) = \frac{(2\mu_{ori}\mu_{rec}+c_1)(2\sigma_{ori\ rec}+c_2)}{(\mu_{ori}^2+\mu_{rec}^2+c_1)(\sigma_{ori}^2+\sigma_{rec}^2+c_2)} \qquad (3)$$

$\mu_{ori}$ represents an average value of *ori*; $\mu_{rec}$ represents an average value of $\mu_{rec}$; $\sigma_{ori\ rec}$ represents a covariance between *ori* and *rec*; $\sigma_{ori}^2$ represents a variance of *ori*; $\sigma_{rec}^2$ represents a variance of *rec*; and $c_1$ and $c_2$ represent constants.

Generally, values of $c_1$ and $c_2$ may be shown as follows.

$$c_1 = (K1 * L)^2$$

$$c_2 = (K2 * L)^2$$

$K1$ may be 0.01; $K2$ can be 0.03; and L indicates a dynamic range of a pixel value, generally, the value is 255.

A larger SSIM value between *ori* and *rec* indicates a smaller loss between *ori* and *rec*.

In this example, a principle of optimizing the parameters of the AI encoding network and the AI decoding network may be that values of PSNR and SSIM between *ori* and *rec* are as large as possible. For example, when the AI encoding network and the AI decoding network are trained, it may be limited that the optimization meets the following condition: the PSNR between *ori* and *rec* is greater than a first threshold, and the SSIM between *ori* and *rec* is greater than a second threshold. The first threshold may be values such as 38, 39, or 40, or a larger value, and may be set according to an image quality requirement. The second threshold may be a number whose value falls within a range of 0 to 1 such as 0.8, 0.85, and 0.9.

Generally, when the AI encoding network and the AI decoding network are trained and optimized, the loss between the input of the AI encoding network and the output of the AI decoding network is directly calculated. However, this embodiment of the present invention involves compression of the RAW image, and the RAW image is not an effect that can be directly viewed by the user, and an image (for example, a JPEG image) directly observed by the user is obtained after a series of ISP processing and YUV domain processing are subsequently performed. However, during the ISP processing and YUV domain processing on the RAW image, and a conversion of the RAW image to YUV or RGB space, a specific loss occurs. Consequently, a RAW domain loss cannot directly match a user experience loss.

For example, relevant mapping in ISP processing results in the RAW domain loss that cannot be directly matched with the user experience loss. For example, when processing such as DRC and gamma correction is performed in the ISP module, RAW data of different data segments is compressed or amplified to another data segment when mapped to the YUV domain or RGB domain seen by an end user. This causes losses. For example, valid bits of RAW domain data are generally 10 to 12 bits, but valid bits of YUV or RGB domain data are 8 bits. Therefore, the DRC is used to map and compress bits. However, to ensure quality, the compression is not linear compression and usually ensure that more bit widths are used in a pixel range that appears in a high frequency band in a middle interval. The gamma correction is also a stretching adjustment manner for curve mapping of brightness. As a result, brightness of a final image and RAW domain information are adjusted in a non-linear manner.

In view of the foregoing case in which the RAW domain loss cannot be directly matched with the user experience loss, if the loss of the RAW image input to the AI encoding network and the loss of the reconstructed RAW image output by the AI decoding network are directly calculated, a PSNR and/or SSIM between the RAW image input to the AI encoding network and the reconstructed RAW image output by the AI decoding network may be small, but a loss is very large after a series of ISP processing and YUV domain processing are converted to YUV and RGB space.

For example, it is assumed that each pixel difference between the RAW image and the reconstructed RAW image is 1 and eight-bit valid bits are used as an example for calculation. In this case, a PSNR between the RAW image and the reconstructed RAW image can reach 48.13 decibel (dB) obtained through calculation according to formula (2). The PNSR between the RAW image and the reconstructed RAW image is already very high. Generally, when the PSNR of the YUV domain or RGB domain reaches 40 dB or above, quality is almost invisible to a naked eye. However, in the RAW domain, if only one component of the four components R, G, G, and B presents such a loss, this loss can lead to clear color cast, and this may have a very clear problem with end user experience.

However, in this embodiment of this application, the RAW image input to the AI encoding network and the reconstructed RAW image output by the AI decoding network are first converted into a corresponding input YUV image and a corresponding reconstructed YUV image, and then losses of the input YUV image and the reconstructed YUV image are calculated. As a loss between the input of the AI encoding network and the output of the AI decoding network, the loss between the input of the AI encoding network and the output of the AI decoding network is estimated in a YUV domain (or an RGB domain). Therefore, after a reconstructed RAW image output by the trained AI decoding network is converted to the YUV domain, a loss such as color aberration and distortion is still small, and an impact caused by a case in which the RAW domain loss cannot be directly matched with the user experience loss is reduced.

Optionally, in this embodiment of this application, for a scenario in which a sensor of a camera module outputs a plurality of frames of RAW images, before an encoding module compresses the RAW image based on intra-frame correlation of each frame of RAW image through the AI encoding network, the plurality of frames of RAW images may also be preprocessed based on inter-frame correlation between the plurality of frames of RAW images.

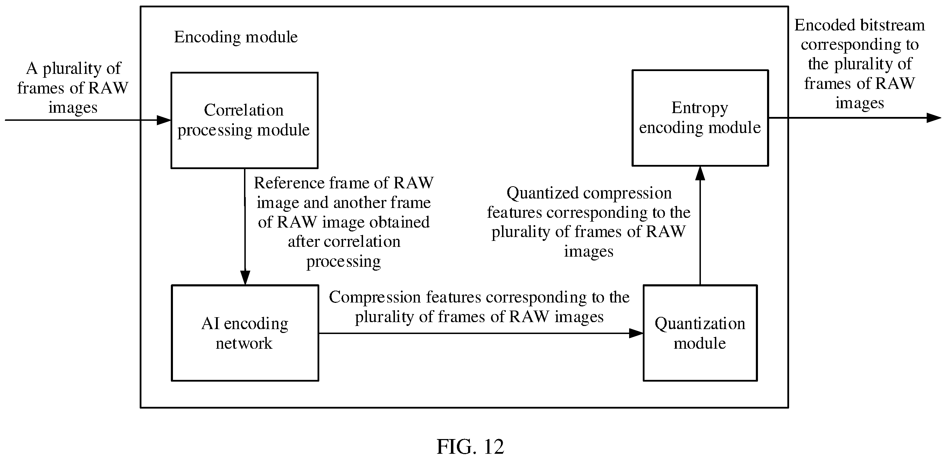

For example, FIG. 12 is another schematic diagram of an encoding module according to an embodiment of this application. As shown in FIG. 12, the encoding module further includes a correlation processing module. Before an AI encoding network compresses a RAW image based on intra-frame correlation of each frame of RAW image, the correlation processing module may first select one frame from a plurality of frames of RAW images as a reference frame. Then, another frame in the plurality of frames of RAW images is predicted based on inter-frame correlation between a reference frame and a plurality of frames of RAW images, and a reference frame of RAW image and another frame of RAW image obtained after correlation processing are output to the AI encoding network for subsequent processing. The another frame of RAW image obtained after correlation processing is a residual image corresponding to the another frame of RAW image obtained after prediction on the another frame of RAW image according to the reference frame of RAW image. To be specific, the reference frame of RAW image is directly sent to the AI encoding network for subsequent processing, and the another frame of RAW image is predicted based on the inter-frame correlation between the reference frame and the plurality of frames of RAW images, and then sent to the AI encoding network for processing. In this manner, a data amount occupied by another frame of RAW image can be reduced, thereby improving a compression rate of the encoding module for the plurality of frames of RAW images.

For example, when a mobile phone detects that a current photographing scene is an HDR scene, a camera module captures a plurality of frames of RAW images with different EV values. Generally, in the HDR scene, EV values of the plurality of frames of RAW images output by a sensor of the camera module are different (and may be partially the same). There is a linear relationship between RAW images corresponding to different EV values. For example, for two frames of RAW images with adjacent EV values of EV-0 and EV-1, (that is, an EV value of one frame of RAW image is 0, and an EV value of the other frame of RAW image is -1). It is assumed that a pixel value of a location (a pixel) in the RAW image of the EV-0 is $P_0$ and a pixel value of the same location in RAW image of the EV-1 is $P_{-1}$, a corresponding sensor has a black level offset. After the offset is subtracted, a relationship of two pixel values between $P_0$ and $P_{-1}$ is twice. That is, $P_0$ and $P_{-1}$ satisfy the following formula (4).

$$P_0 - BLC = 2 \times (P_{-1} - BLC) \tag{4}$$

$BLC$ represents the black level offset.

Certainly, because the RAW image output by the sensor is interfered by factors such as noise, a defect pixel, and a valid range of pixel bits, and $P_0$ and $P_{-1}$ may not completely satisfy the linear relationship described in the foregoing formula (4), but the foregoing linear relationship is presented as a whole.

Therefore, for a plurality of frames of RAW images with different EV values and output by the sensor of the camera module in the HDR scene, the correlation processing module may first select one frame from the plurality of frames of RAW images as the reference frame (may be randomly selected or select a first frame). Then, another frame is predicted according to the reference frame based on the linear relationship shown in the foregoing formula (4), and the another frame of RAW image may be predicted as an almost all-0 RAW image (the RAW image is the residual image). A large part of data that does not satisfy the formula (4) is caused by the defect pixel, noise, and the like. Therefore, a compression rate of this type of data can be improved, especially for data with a large absolute value.

It should be understood that the linear relationship shown in the foregoing formula (4) is merely an example for description in the HDR scene. Similarly, in a scenario in which another sensor outputs a plurality of frames of RAW images, the correlation processing module may also preprocess the RAW image based on the inter-frame correlation between the plurality of frames of RAW images. For example, in an EDOF scene, the correlation processing module may preprocess the RAW image according to a region definition difference between a plurality of frames of RAW images, and the like.

In this embodiment of this application, when the sensor outputs a plurality of frames of RAW images in different scenarios, the correlation processing module may perform processing based on the inter-frame correlation between the plurality of frames of RAW images by using different algorithms. This is not limited in this application. For example, when obtaining the plurality of frames of RAW images through the camera module, the mobile phone records metadata (metadata) information of each frame of RAW image, which may also be referred to as description data or parameter information of the RAW image. For example, the metadata of the RAW image may include a photographing scene (such as HDR) of the frame of RAW image, a width and a height of the RAW image, an ISO value, and the like. The correlation processing module may select, based on the metadata information of the plurality of frames of RAW images, a corresponding algorithm to perform processing based on the inter-frame correlation between the plurality of frames of RAW images. For example, in the HDR scene, the algorithm according to the foregoing formula (4) is selected. Optionally, if there is no linear relationship between the plurality of frames of RAW images output by the sensor in some scenarios that can establish a mathematical model (that is, the inter-frame correlation cannot be extracted by using an algorithm), the correlation processing module may not perform inter-frame correlation processing.

For example, the correlation processing module may be a program module (or an algorithm unit) in the mobile phone, and can process correlation of the plurality of frames of RAW images for different photographing scenes. Optionally, for a scenario in which the sensor of the camera module outputs one frame of RAW image, the correlation processing module may be skipped, and the frame of RAW image may be directly sent to the AI encoding network for subsequent processing.

In a scenario in which the sensor of the camera module outputs the plurality of frames of RAW images, if the encoding module performs correlation processing on the plurality of frames of RAW images based on the inter-frame correlation between the plurality of frames of RAW images before compressing the RAW image based on the intra-frame correlation of each frame of RAW images through the AI encoding network, after a decoding module performs AI decoding on compression features corresponding to the plurality of frames of RAW images through the AI decoding network, an obtained result is a reconstructed RAW image corresponding to the reference frame of RAW image and a reconstructed residual image corresponding to the another frame of RAW image (a reconstructed RAW image obtained after correlation processing). Therefore, corresponding to the encoding module, the decoding module further needs to perform correlation inverse processing on the reconstructed RAW image corresponding to the reference frame of RAW image obtained by AI decoding and the reconstructed residual image corresponding to the another frame of RAW image, to obtain reconstructed RAW images corresponding to the plurality of frames of RAW images in a one-to-one correspondence.

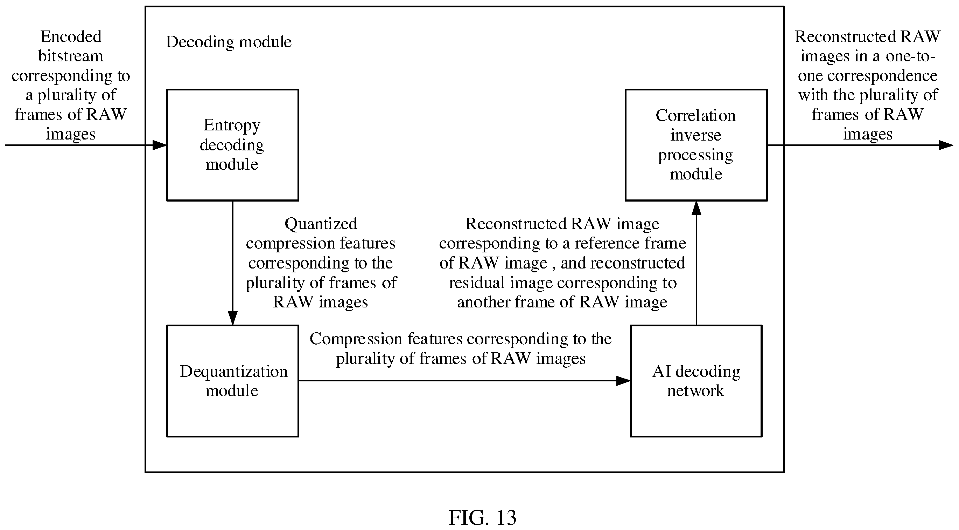

For example, FIG. 13 is another schematic diagram of a decoding module according to an embodiment of this application. As shown in FIG. 13, the decoding module further includes a correlation inverse processing module. After the decoding module performs AI decoding on compression features corresponding to a plurality of frames of RAW images through an AI decoding network, to obtain a reconstructed RAW image corresponding to a reference frame of RAW image and a reconstructed residual image corresponding to another frame of RAW image. The correlation inverse processing module may perform correlation inverse processing on the reconstructed RAW image corresponding to the reference frame of RAW image and the reconstructed residual image corresponding to the another frame of RAW image, to obtain reconstructed RAW images corresponding to the plurality of frames of RAW images in a one-to-one correspondence. Specifically, a processing process of the correlation inverse processing module may be completely opposite to a process of a correlation processing module on a mobile phone side. Details are not described herein again.

For example, an encoded bitstream corresponding to a plurality of frames of RAW images uploaded by a mobile phone to a cloud further includes metadata information of each frame of RAW image. The correlation inverse processing module may know, based on the metadata information of each frame of RAW image, which algorithm is used by the correlation processing module on the mobile phone side to perform correlation processing on the plurality of frames of RAW images, so that the correlation inverse processing module may adopt a process opposite to that of the correlation processing module on the mobile phone side, to perform correlation inverse processing on the reconstructed RAW image corresponding to the reference frame of RAW image and a reconstructed residual image corresponding to the another frame of RAW image.

Optionally, in some other embodiments of this application, when an AI encoding network and an AI decoding network are obtained through training, data of a scenario in which a sensor outputs a plurality of frames of RAW images may be added to sample training data, so that the AI encoding network and the AI decoding network learn inter-frame correlation between the plurality of frames of RAW images. For a scenario in which a sensor of a camera module outputs the plurality of frames of RAW images, a function of the correlation processing module in the foregoing embodiment may be implemented through the AI encoding network, and correspondingly, a function of the correlation inverse processing module may be implemented through the AI decoding network.

For example, in an HDR scene, the plurality of frames of RAW images output by the sensor in the HDR scene may be added to a sample RAW image, and a plurality of frames of reconstructed RAW images corresponding to the plurality of frames of RAW images output by the sensor in the HDR scene may be added to a sample reconstructed RAW image. When the AI encoding network and the AI decoding network are trained by using the sample training data, for training data related to the foregoing HDR scene, a fixed corresponding EV value difference of a plurality of frames of sample RAW images may be placed on a corresponding channel, to enable the AI encoding network and AI decoding network to learn the inter-frame correlation of RAW images with different EV values in the HDR scene.

Alternatively, in an EDOF scene, a plurality of frames of RAW images output by the sensor in the EDOF scene may be added to a sample RAW image, and a plurality of frames of reconstructed RAW images corresponding to the plurality of frames of RAW images output by the sensor in the EDOF scene are correspondingly added to a sample reconstructed RAW image, and the like. For the training data related to the foregoing EDOF scene, a fixed location of a same focusing distance of a plurality of frames of sample RAW images may be placed on a corresponding channel, so that the AI encoding network and the AI decoding network learn inter-frame correlations of RAW images at different focusing distances in the EDOF scene.

Therefore, when performing AI encoding on the plurality of frames of RAW images after the training is completed, the AI encoding network compresses each frame of RAW image based on the intra-frame correlation of each frame of RAW image, and may select one frame from the plurality of frames of RAW images as the reference frame and predicts another frame in the plurality of frames of RAW images based on the inter-frame correlation between the reference frame and the plurality of frames of RAW images. Correspondingly, a process in which the AI decoding network performs AI decoding on compression features corresponding to the plurality of frames of RAW images after training is completed is opposite to a process in which the AI encoding network performs AI encoding. Details are not described again.

In some embodiments of this application, only one AI encoding network and one corresponding AI decoding network may be obtained through training. For a plurality of different scenarios in which a sensor outputs the plurality of frames of RAW images, both the AI encoding network and the AI decoding network are applicable. For example, the AI encoding network and the AI decoding network may be trained by using the sample training data in the HDR scene, so that the AI encoding network and the AI decoding network learn inter-frame correlation of RAW images with different EV value differences in the HDR scene. Then, the AI encoding network and the AI decoding network may continue to be trained by using the sample training data in the EDOF scene, so that the AI encoding network and the AI decoding network learn inter-frame correlation of RAW images at different focus distances in the EDOF scene. Similarly, sample training data in a scenario in which more different sensors output a plurality of frames of RAW images may be used to train the AI encoding network and the AI decoding network, and the like. Therefore, the AI encoding network and the corresponding AI decoding network may be applicable to a plurality of different scenarios in which the sensor outputs the plurality of frames of RAW images.

It may be understood that the foregoing AI encoding network and AI decoding network may be applicable to a plurality of different scenarios in which the sensor outputs the plurality of frames of RAW images, an encoding module of the mobile phone includes only one AI encoding network, and a decoding module of the cloud includes only one AI decoding network.

In some other embodiments, for each scenario in which the sensor outputs the plurality of frames of RAW images, the AI encoding network and the AI decoding network that are applicable to the scenario may also be obtained through training. In other words, for a plurality of different scenarios in which the sensor outputs the plurality of frames of RAW images, a plurality of AI encoding networks and AI decoding networks that are in a one-to-one correspondence with the scenario may be obtained through training. For example, a first AI encoding network and a first AI decoding network may be trained by using the sample training data in the HDR scene, so that the first AI encoding network and the first AI decoding network learn inter-frame correlations of RAW images with different EV value differences in the HDR scene. In addition, a second AI encoding network and a second AI decoding network may alternatively be trained by using the sample training data in the EDOF scene, so that the second AI encoding network and the second AI decoding network learn inter-frame correlations of RAW images at different focus distances in the EDOF scene. Similarly, sample training data in a scenario in which more different sensors output a plurality of frames of RAW images may be used to train a third AI encoding network and a third AI decoding network, and the like. Therefore, each group of AI encoding networks and AI decoding networks (The first AI encoding network and the first AI decoding network may be a group) is applicable to a scenario where the sensor outputs the plurality of frames of RAW images.

It may be understood that, for a scenario in which each group of AI encoding networks and AI decoding networks is applicable to a scenario in which the sensor outputs the plurality of frames of RAW images, if the encoding module of the mobile phone includes a plurality of (for example, M, where M is an integer greater than 1) AI encoding networks, the decoding module of the cloud correspondingly includes a plurality of (M) AI decoding networks. When the sensor outputs the plurality of frames of RAW images, the encoding module may select, based on the metadata information of the plurality of frames of RAW images, an AI encoding network that meets the scenario corresponding to the plurality of frames of RAW images to perform AI encoding on the plurality of frames of RAW images. An encoded bitstream corresponding to a plurality of frames of RAW images uploaded by a mobile phone to a cloud further includes metadata information of each frame of RAW image. The decoding module may select, based on the metadata information of the plurality of frames of RAW images, an AI decoding network that meets the scenario corresponding to the plurality of frames of RAW images, to perform AI decoding on the plurality of frames of RAW images.

In still some embodiments, a same group of AI encoding networks and AI decoding networks may be obtained through training for some close or similar scenarios. For other different scenarios, an AI encoding network and an AI decoding network that are applicable only to this scenario are obtained through training. For example, in a low light scenario and an HDR scene, the plurality of frames of RAW images output by the sensor are a plurality of frames of RAW images with different EV values. Therefore, a same group of AI encoding networks and AI decoding networks may be obtained through training for the low light scenario and the HDR scene. However, in the EDOF scene, the plurality of frames of RAW images output by the sensor are a plurality of frames of RAW images with different focus distances. Therefore, the AI encoding network and AI decoding network that are applicable only to the EDOF scene may be obtained through training. Similarly, when the sensor outputs the plurality of frames of RAW images, the encoding module and the decoding module may separately select, based on the metadata information of the plurality of frames of RAW images, an AI encoding network and an AI decoding network that meet the scenario corresponding to the plurality of frames of RAW images for processing. Details are not described again. It should be noted that a correspondence between an AI encoding network and an AI decoding network and a photographing scene is not limited in this application.

In the foregoing embodiment, for example, an AI network-based implementation solution of the encoding module and the decoding module is provided. Optionally, in still some embodiments, the encoding module of the mobile phone may also be a distributed encoding module. Correspondingly, the decoding module of the cloud may perform decoding by using a policy corresponding to the distributed encoding.

That a sensor of a camera module outputs the plurality of frames of RAW images is used as an example. After the camera module captures the plurality of frames of RAW images, the distributed encoding module may perform channel coding on the plurality of frames of RAW images in a distributed source coding (distributed source coding, DSC) manner, to obtain a plurality of groups of bitstream packets corresponding to the plurality of frames of RAW images, where one frame of RAW image is corresponding to one group of bitstream packet. Each group of bitstream packets includes a plurality of bitstream packets, and each bitstream packet includes at least an error correction code and metadata information of a RAW image corresponding to the bitstream packet.

For example, the distributed encoding module may encode each frame of RAW image in a channel coding manner such as low-density parity-check (low-density parity-check, LDPC) or turbo coding. For example, it is assumed that a size of a frame of RAW image is 2 megabytes (M), when the distributed encoding module encodes the frame of RAW image by using an LDPC encoding algorithm, 1024 bits may be divided into one bitstream packet, to obtain 16 bitstream packets corresponding to the frame of RAW image.

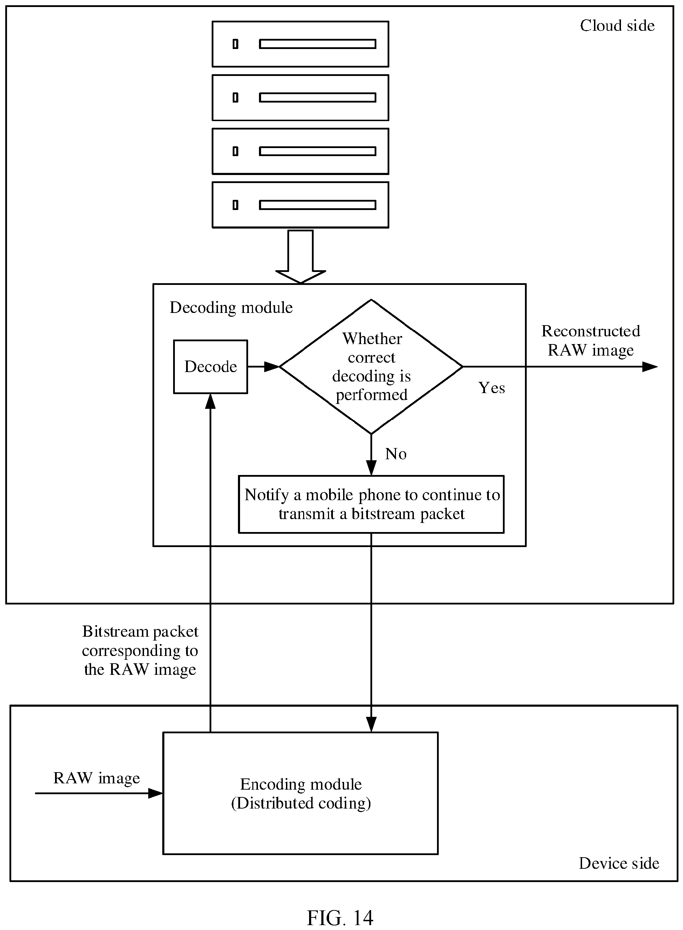

Then, the mobile phone may sequentially upload, in a unit of a frame, bitstream packets corresponding to each frame of RAW image to the cloud, so that the cloud performs decoding to obtain a reconstructed RAW image. Specifically, FIG. 14 is a schematic diagram of a processing procedure of a decoding module according to an embodiment of this application. Refer to FIG. 14. For each frame of RAW image, a mobile phone may upload a bitstream packet corresponding to a frame of RAW image, and when receiving the bitstream packet corresponding to the frame of RAW image, a decoding module of a cloud may obtain a prediction value of the frame of RAW image, and perform error correction on the prediction value according to an error correction code in the received bitstream packet, to decode the frame of RAW image (that is, a decoding process in the decoding module shown in FIG. 14). Then, the decoding module may determine whether the RAW image is decoded correctly. If the RAW image is decoded correctly, a reconstructed RAW image is output to a subsequent processing module, for example, a RAW image post-processing module. If the cloud decodes incorrectly based on the received bitstream packet (that is, the cloud does not decode correctly), it indicates that the error correction code included in the currently received bitstream packet is insufficient for error correction, and the cloud may require a mobile phone side to continue to transmit an error correction code, that is, notify the mobile phone to continue to transmit a bitstream packet, and repeat the foregoing process until decoding correctly. For example, the mobile phone may first upload 1st bitstream packet corresponding to the frame of RAW image, and when receiving the 1st bitstream packet corresponding to the frame of RAW image, the decoding module of the cloud may first obtain the prediction value of the frame of RAW image. Then, error correction is performed on the prediction value according to the error correction code in the 1st bitstream packet, to decode the frame of RAW image. If the cloud decodes based on the 1st bitstream packet corresponding to the frame of RAW image incorrectly, it indicates that an error correction code included in the 1st bitstream packet is insufficient for error correction. The cloud may require the mobile phone side to continue to transmit the error correction code, that is, continue to transmit a 2nd bitstream packet corresponding to the frame of image. For example, the cloud may send a notification message to the mobile phone to indicate the mobile phone to continue to upload the 2nd bitstream packet corresponding to the frame of image. Therefore, the cloud may continue to perform decoding according to the 2nd bitstream packet corresponding to the frame of RAW image. By analogy, the cloud may perform decoding by using more error correction code, until the decoding correctly and binary matching, the cloud may obtain a reconstructed RAW image corresponding to the frame of RAW image. After the reconstructed RAW image corresponding to the frame of RAW image is obtained, the decoding module may output the reconstructed RAW image to a RAW domain post-processing module for subsequent processing. That decoding correctly means that iteration is performed continuously until all parity checks are zeroed.

Optionally, in this embodiment of this application, in a scenario in which a camera module captures a plurality of frames of RAW images, when obtaining a prediction value of a first frame of RAW image through prediction, the decoding module of the cloud may perform prediction in an intra-frame prediction manner based on an initial prediction value (pred). The initial prediction value may be a default value (a preset value), for example, may be an intermediate value of valid bits. For example, when the valid bit is 255, the initial prediction value may be 128. In addition, for the intra-frame prediction manner described herein, reference may be made to a conventional image encoding manner or an intra-frame prediction manner of a video. This is not limited herein.

When the decoding module of the cloud predicts and obtains prediction values of other frames of RAW images after the first frame of RAW image, (for example, a second frame and a third frame, where the second frame and the third frame indicate a RAW image sequence of the bitstream packet uploaded by the mobile phone), an inter-frame correlation prediction model may be established based on the reconstructed RAW image obtained by decoding, and the prediction values of the other frames of RAW images are obtained based on the inter-frame correlation prediction model.

For example, it is assumed that in an HDR scene, a sensor of the camera module outputs three frames of RAW images with different EV values, and the EV values are EV-0, EV-1, and EV-2 respectively. In this case, metadata information of the RAW images included in the bitstream packet uploaded by the mobile phone to the cloud at least includes: A photographing scene of the RAW images corresponding to the bitstream packet is an HDR scene, and EV values of the RAW images corresponding to the bitstream packet. An EV value of the first frame of RAW image uploaded by the mobile phone to the cloud is EV-0, an EV value of the second frame of RAW image is EV-1, and an EV value of the third frame of RAW image is EV-2.

For the RAW image of EV-0, the decoding module of the cloud may obtain a prediction value of the RAW image of EV-0 in an intra-frame prediction manner based on the initial prediction value (pred). In addition, error correction is performed according to a bitstream packet corresponding to the RAW image of EV-0 in the foregoing manner, to obtain a reconstructed RAW image corresponding to the RAW image of EV-0.

Then, for the RAW image of EV-1, the decoding module of the cloud may determine, based on metadata information that is of the RAW image and that is included in a bitstream packet corresponding to the RAW image of EV-1, that there is a linear relationship between the RAW image of EV-0 and the RAW image of EV-1 according to the foregoing formula (4). Therefore, the decoding module of the cloud may use the reconstructed RAW image corresponding to the RAW image of EV-0 as a reference frame, and establish the following correlation prediction model corresponding to the RAW image of EV-1 by segment to obtain a prediction value of the RAW image of EV-1 through prediction.

$$pred_{-1} = \begin{cases} a_1 \times (rec_0 - BLC) + BLC + b_1 & min \geq rec_0 \\ 2 \times (rec_0 - BLC) + BLC & min < rec_0 < max \\ a_2 \times (rec_0 - BLC) + BLC + b_2 & max \leq rec_0 \end{cases}$$

$pred_{-1}$ represents the prediction value of the RAW image of EV-1, and $rec_0$ represents an actual value of the reconstructed RAW image corresponding to the RAW image of EV-0. Initial values of parameters $a_1$, $a_2$, $b_1$, and $b_2$ are 2, 2, 0, and 0 respectively. $min$ and $max$ are set to 1/16 and 15/16 of a maximum value of valid bits, respectively. For example, it is assumed that the valid bits are 8 bits, $min$ is set to 16 and $max$ is set to 240. The valid bits are related to the sensor. Sizes of the valid bits are not limited here.

According to the correlation prediction model corresponding to the RAW image of EV-1, the cloud may obtain a prediction value of the RAW image of EV-1, and then use the prediction value as data has been received by the decoding module by default. As the foregoing manner, error correction is performed on the prediction value by using an error correction code in bitstream packets actually transmitted from a mobile phone side, until a reconstructed RAW image corresponding to the RAW image of EV-1 is obtained.

Further, in some implementations, for the RAW image of EV-2, the decoding module of the cloud may determine, based on metadata information that is of the RAW image and that is included in the bitstream packet corresponding to the RAW image of EV-2, that there is a linear relationship between the RAW image of EV-1 and the RAW image of EV-2 according to the foregoing formula (4). Therefore, the decoding module of the cloud may use the reconstructed RAW image corresponding to the RAW image of EV-1 as a reference frame, and establish a correlation prediction model corresponding to the RAW image of EV-2 by segment to obtain a prediction value of the RAW image of EV-2 through prediction. For details, refer to the correlation prediction model corresponding to the RAW image of EV-1. Details are not described again.

In some other implementations, for the RAW image of EV-2, the decoding module of the cloud may also use both the reconstructed RAW image corresponding to the RAW image of EV-0 and the reconstructed RAW image corresponding to the RAW image of EV-1 as the reference frame. The following correlation prediction model corresponding to the RAW image of EV-2 is established by segment to obtain the prediction value of the RAW image of EV-2 through prediction.

$$pred_{-2} = \begin{cases} a_1 \times (rec_0 - BLC) + b_1 \times (rec_{-1} - BLC) + c_1 + BLC & min \geq rec_0 \\ 2 \times (rec_0 - BLC) + (rec_{-1} - BLC) + BLC & min < rec_0 < max \\ a_2 \times (rec_0 - BLC) + b_2 \times (rec_{-1} - BLC) + c_2 + BLC & max \leq rec_0 \end{cases}$$

$pred_{-2}$ represents the prediction value of the RAW image of EV-2, $rec_0$ represents the actual value of the reconstructed RAW image corresponding to the RAW image of EV-0, and $rec_{-1}$ represents an actual value of the reconstructed RAW image corresponding to the RAW image of EV-1. Initial values of parameters $a_1$, $a_2$, $b_1$, $b_2$, $c_1$, and $c_2$ can be set to 2, 2, 1, 1, 0, and 0 respectively. The initial values of parameters $a_1$, $a_2$, $b_1$, and $b_2$ are 2, 2, 0, and 0 respectively. $min$ and $max$ are the same as those in the foregoing embodiments. Details are not described again.

According to the correlation prediction model corresponding to the RAW image of EV-2, the cloud may alternatively obtain the prediction value of the RAW image of EV-2, and then use the prediction value as data has been received by the decoding module by default. As the foregoing manner, error correction is performed on the prediction value by using an error correction code in bitstream packets actually transmitted from a mobile phone side, until a reconstructed RAW image corresponding to the RAW image of EV-2 is obtained.

It can be learned from the foregoing manners of obtaining the prediction value of the RAW image of EV-1 and obtaining the prediction value of the RAW image of EV-2, in this embodiment of this application, when a prediction value of a RAW image of a specific EV value is obtained, a reconstructed RAW image of a previous obtained frame may be selected as the reference frame, or obtained a plurality of frames of reconstructed RAW images may be selected as the reference frame. To be specific, content that has been reconstructed in a cloud currently may be used as a reference for a subsequent frame. For example, if n frames have been successfully decoded, a maximum quantity of reference frames that can be set for a next frame is n (n is an integer greater than 0). Optionally, in this embodiment of this application, when a quantity of frames of RAW images output by the sensor of the camera module is larger, the cloud may determine, according to an actual requirement, a quantity of reconstructed frames used for reference. This is not limited herein.

Optionally, in a process of obtaining the reconstructed RAW image by decoding, the decoding module of the cloud may alternatively update parameters such as $a_1$, $a_2$, $b_1$, and $b_2$ in the correlation prediction model based on the reconstructed RAW image. For example, after the cloud obtains the reconstructed RAW image corresponding to the RAW image of EV-0 and the reconstructed RAW image corresponding to the RAW image of EV-1, the reconstructed RAW image corresponding to the RAW image of EV-0 and the reconstructed RAW image corresponding to the RAW image of EV-1 may be substituted into the correlation prediction model corresponding to the RAW image of EV-1 ($pred_{-1}$ is replaced with the actual value of the reconstructed RAW image corresponding to the RAW image of EV-1), recalculate the values of $a_1$, $a_2$, $b_1$, and $b_2$, and replace $a_1$, $a_2$, $b_1$, and $b_2$ with recalculated results to update. When a correlation prediction model corresponding to the RAW image of EV-2 is subsequently established, updated parameters such as $a_1$, $a_2$, $b_1$, and $b_2$ may be used.

Similarly, after the reconstructed image corresponding to the RAW image of EV-2 is obtained, the parameters such as $a_1$, $a_2$, $b_1$, and $b_2$ may continue to be updated. Details are not described again. In other words, in this embodiment of this application, the parameters such as $a_1$, $a_2$, $b_1$ and $b_2$ may be continuously updated on a cloud side by using more data.

It should be noted that generally, the sensor cannot meet a linear relationship in a dark region that is close to 0 and an overexposed region that is close to a maximum value of a highest bit. Therefore, in this embodiment of this application, it may be assumed that the sensor meets a linear relationship to perform mathematical modeling, to predict a pixel value of a next EV

In addition, it may be understood that the foregoing correlation prediction model in the HDR scene is merely an example for description. Alternatively, another mathematical model may be correspondingly established according to a photographing scene of a plurality of frames of RAW images output by the sensor, and a related unknown parameter is continuously updated. This is not limited herein.

It can be learned from the foregoing that, when an encoding module on a mobile phone side encodes the RAW image by using the distributed coding manner, a more accurate prediction value in the cloud indicates fewer error correction codes that need to be transmitted, and a higher compression rate is obtained. Therefore, in this embodiment, data correlation on the cloud can be fully utilized to achieve a higher compression rate and effectively save upload traffic.

Optionally, in this embodiment of this application, the decoding module of the cloud may further obtain the prediction value of the RAW image through prediction with reference to other data stored in the cloud. The other data may be a previous image uploaded and stored by a user (which may be a current photographing user or another user), some correlation prediction models established in a previous image processing process, or the like. For example, the metadata information of the RAW image of a specific EV value may further include location information of the frame of RAW image obtained by the mobile phone (For example, it can be longitude and latitude coordinates of the mobile phone). When the cloud needs to obtain the prediction value of the frame of RAW image, the cloud may first obtain, from a database of the cloud based on the location information corresponding to the frame of RAW image, another image that is also shot at a place (for example, a scenic spot) corresponding to the location information. Then, a RAW image corresponding to another image that has the same location information and is obtained from the database may be used as a reference frame, to obtain the prediction value of the RAW image and the like.

Optionally, in some embodiments, a RAW domain processing algorithm may alternatively be implemented on the mobile phone side. For example, in a scenario in which the camera module captures a plurality of frames of RAW images, multi-frame fusion processing may be first performed on the plurality of frames of RAW images on the mobile phone side, to obtain a single frame of RAW image. Then, the mobile phone may upload the obtained single frame of RAW image to the cloud for ISP processing, YUV domain processing, first-format encoding, and the like. Finally, the cloud may return an image in a first format to the mobile phone side. For uploading a single frame of image, reference may be made to the description in the foregoing embodiment. Details are not described herein again.

Optionally, refer to FIG. 4. In this embodiment of this application, when performing YUV domain image processing on the cloud, a YUV image may be further optimized based on a high-quality reference image stored in the database, so that quality of a finally obtained image in the first format is better. For example, the cloud may refer to and learn the high-quality reference image stored in the database, to obtain a network model applicable to various scenarios. Then, in the foregoing photographing process, the cloud may optimize the YUV image by using a network model that meets the photographing scene. A network architecture of the network model is not specifically limited herein.

For another example, for a scenario in which a user takes a selfie, the user usually takes a photo by himself. If a current photo is blurred due to a reason such as hand shaking, in a case in which the user is authorized to access data of the user, the cloud may further use the data to perform AI learning on the current blurred image by using face information of clear photos of the user, to obtain a more real clear photo of the user.

Similarly, in this embodiment of this application, cloud resources may be fully utilized, so that image processing achieves a better effect. Examples are not described one by one herein again.

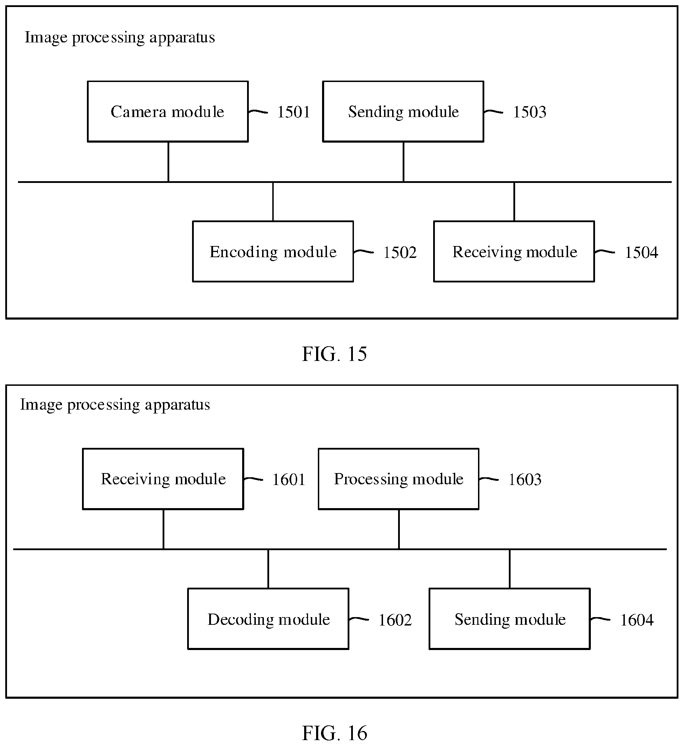

Corresponding to the image processing method in the foregoing embodiments, an embodiment of this application further provides an image processing apparatus, which may be applied to a terminal device. A function of the apparatus may be implemented by hardware, or may be implemented by hardware by executing corresponding software. The hardware or the software includes one or more modules or units corresponding to the foregoing function. For example, FIG. 15 is a schematic diagram of a structure of an image processing apparatus according to an embodiment of this application. As shown in FIG. 15, the image processing apparatus may include a camera module 1501, an encoding module 1502, a sending module 1503, and a receiving module 1504.

The camera module 1501 is configured to: in response to a photographing operation of a user, capture a RAW image corresponding to a current photographing scene. The encoding module 1502 is configured to encode the RAW image corresponding to the current photographing scene, to obtain an encoded bitstream of the RAW image corresponding to the current photographing scene. The sending module 1503 is configured to send, to a cloud, the encoded bitstream of the RAW image corresponding to the current photographing scene. The receiving module 1504 is configured to receive an image in a first format from the cloud, where the image in the first format is generated by the cloud based on the encoded bitstream of the RAW image corresponding to the current photographing scene.

Optionally, for a specific encoding process and a specific structure of the encoding module 1502, refer to the description in the foregoing method embodiment. Details are not described herein again.

Optionally, the camera module 1501 is further configured to: determine, in response to a first selection operation of the user, that the RAW image captured during photographing needs to be uploaded to the cloud for processing.

Similarly, an embodiment of this application further provides an image processing apparatus, which may be applied to a cloud. A function of the apparatus may be implemented by hardware, or may be implemented by hardware by executing corresponding software. The hardware or the software includes one or more modules or units corresponding to the foregoing function. For example, FIG. 16 is a schematic diagram of a structure of another image processing apparatus according to an embodiment of this application. As shown in FIG. 16, the image processing apparatus may include a receiving module 1601, a decoding module 1602, a processing module 1603, and a sending module 1604.

The receiving module 1601 is configured to receive, from a terminal device, an encoded bitstream of a RAW image corresponding to a current photographing scene. The decoding module 1602 is configured to decode the encoded bitstream of the RAW image corresponding to the current photographing scene, to obtain a reconstructed RAW image corresponding to the current photographing scene. The processing module 1603 is configured to process the reconstructed RAW image corresponding to the current photographing scene, to generate an image in a first format corresponding to the current photographing scene. The sending module 1604 is configured to send the image in the first format to the terminal device.

For example, the processing module 1603 may include a RAW domain post-processing module, an ISP module, a YUV domain post-processing module, a first-format encoder, and the like. For a specific processing process and a specific structure of the processing module 1603, refer to the description in the foregoing method embodiment.

Optionally, for a specific encoding process and a specific structure of the decoding module 1602, refer to the description in the foregoing method embodiment. Details are not described herein again.

It should be understood that division of units or modules in the apparatus is merely logical function division. During actual implementation, all or some of the units or modules may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms.

For another example, when the unit in the apparatus may be implemented in a form of a program invoked by a processing element, the processing element may be a general-purpose processor, for example, a CPU or another processor that can invoke the program. For still another example, the units may be integrated and implemented in a form of a system-on-a-chip (system-on-a-chip, SOC).

In an implementation, units used by the foregoing apparatus to implement corresponding steps in the foregoing methods may be implemented in a form of scheduling a program by using a processing element. For example, the apparatus may include a processing element and a storage element, and the processing element invokes a program stored in the storage element, to perform the method described in the foregoing method embodiments. The storage element may be a storage element whose processing element is located on a same chip, that is, an on-chip storage element.

In another implementation, the program for performing the foregoing method may be on a storage element that is on a different chip from the processing element, that is, an off-chip storage element. In this case, the processing element invokes or loads the program from the off-chip storage element to the on-chip storage element, to invoke and perform the method in the foregoing method embodiments.

For example, an embodiment of this application may further provide an apparatus, for example, an electronic device. The apparatus may include a processor, and a memory configured to store executable instructions of the processor. When the processor is configured to execute the foregoing instructions, the electronic device implements steps performed by the terminal device or steps performed by the cloud in the image processing method described in the foregoing embodiment. The memory may be inside the electronic device, or may be outside the electronic device. There are one or more processors.

In still another implementation, a unit used by the apparatus to implement each step in the foregoing method may be configured as one or more processing elements. The processing element herein may be an integrated circuit, for example, one or more ASICs, one or more DSPs, one or more FPGAs, or a combination of these types of integrated circuits. These integrated circuits may be integrated together to form a chip.

For example, an embodiment of this application further provides a chip, and the chip may be applied to the foregoing electronic device. The chip includes one or more interface circuits and one or more processors. The interface circuit and the processor are interconnected through a line. The processor receives computer instructions from the memory of the electronic device through the interface circuit, and executes the computer instructions, to implement the steps performed by the terminal device or the steps performed by the cloud in the image processing method described in the foregoing embodiments.

An embodiment of this application further provides a computer program product, including computer readable code. When the computer readable code runs in an electronic device, the electronic device implements the steps performed by the terminal device or the steps performed by the cloud in the image processing method described in the foregoing embodiments.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a singlechip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, and the computer-readable storage medium stores computer program instructions. When the computer program instructions are executed by the electronic device, the electronic device implements steps performed by the terminal device or steps performed by the cloud in the image processing method described in the foregoing embodiment.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An image processing method, wherein the method comprises:

   capturing, by a terminal device, a RAW image corresponding to a current photographing scene in response to a photographing operation of a user;
   encoding, by the terminal device, the RAW image corresponding to the current photographing scene to obtain an encoded bitstream of the RAW image corresponding to the current photographing scene, and sending the encoded bitstream of the RAW image corresponding to the current photographing scene to a cloud; and
   receiving, by the terminal device, an image in a first format from the cloud, wherein the image in the first format is generated by the cloud based on the encoded bitstream of the RAW image corresponding to the current photographing scene.

2. The method according to claim 1, wherein the RAW image corresponding to the current photographing scene comprises one frame or a plurality of frames; and

   the encoding, by the terminal device, the RAW image corresponding to the current photographing scene to obtain an encoded bitstream of the RAW image corresponding to the current photographing scene, and sending the encoded bitstream of the RAW image corresponding to the current photographing scene to a cloud comprises: when the RAW image corresponding to the current photographing scene comprises a plurality of frames, encoding, by the terminal device, the plurality of frames of RAW images to obtain an encoded bitstream of the plurality of frames of RAW images, and sending the encoded bitstream of the plurality of frames of RAW images to the cloud.

3. The method according to claim 1 or 2, wherein before the capturing, by a terminal device, a RAW image corresponding to a current photographing scene in response to a photographing operation of a user, the method further comprises: determining, by the terminal device in response to a first selection operation of the user, that a RAW image captured during photographing needs to be uploaded to the cloud for processing.

4. The method according to any one of claims 1 to 3, wherein the encoding, by the terminal device, the RAW image corresponding to the current photographing scene to obtain an encoded bitstream of the RAW image corresponding to the current photographing scene comprises:

   compressing, by the terminal device, the RAW image corresponding to the current photographing scene, to obtain a compression feature of the RAW image corresponding to the current photographing scene;
   quantizing, by the terminal device, the compression feature of the RAW image corresponding to the current photographing scene; and
   performing, by the terminal device, entropy encoding on a quantized compression feature of the RAW image corresponding to the current photographing scene, to obtain the encoded bitstream of the RAW image corresponding to the current photographing scene.

5. The method according to claim 4, wherein when the RAW image corresponding to the current photographing scene comprises a plurality of frames, the compressing, by the terminal device, the RAW image corresponding to the current photographing scene, to obtain a compression feature of the RAW image corresponding to the current photographing scene comprises:

determining, by the terminal device, inter-frame correlation between the plurality of frames of RAW images based on a type of the current photographing scene;

selecting, by the terminal device, one frame from the plurality of frames of RAW images as a reference frame, and predicting, based on the reference frame and the inter-frame correlation between the plurality of frames of RAW images, another frame other than the reference frame in the plurality of frames of RAW images, to obtain a residual image corresponding to the another frame; and

compressing, by the terminal device, the residual image corresponding to the another frame other than the reference frame in the plurality of frames of RAW images and the reference frame, to obtain compression features of the plurality of frames of RAW images.

6. The method according to claim 5, wherein the method further comprises:
determining, by the terminal device, the type of the current photographing scene based on metadata information of the plurality of frames of RAW images.

7. The method according to any one of claims 1 to 3, wherein the encoding, by the terminal device, the RAW image corresponding to the current photographing scene to obtain an encoded bitstream of the RAW image corresponding to the current photographing scene comprises:

performing, by the terminal device, channel coding on the RAW image corresponding to the current photographing scene in a distributed source coding manner, to obtain the encoded bitstream of the RAW image corresponding to the current photographing scene, wherein

when the RAW image corresponding to the current photographing scene comprises the plurality of frames, the encoded bitstream of the RAW image corresponding to the current photographing scene comprises a plurality of groups of bitstream packets in a one-to-one correspondence with the plurality of frames of RAW images; or when the RAW image corresponding to the current photographing scene comprises the one frame, the encoded bitstream of the RAW image corresponding to the current photographing scene comprises a group of bitstream packets corresponding to the one frame of RAW image, and

each group of bitstream packets comprises a plurality of bitstream packets, and each bitstream packet comprises at least an error correction code and metadata information of one frame of RAW image corresponding to the bitstream packet; and

the sending, by the terminal device, the encoded bitstream of the RAW image corresponding to the current photographing scene to a cloud comprises:

sequentially uploading, by the terminal device in a unit of a frame, bitstream packets corresponding to each frame of RAW image to the cloud.

8. An image processing method, wherein the method comprises:

receiving, by a cloud, an encoded bitstream of a RAW image corresponding to a current photographing scene from a terminal device;

decoding, by the cloud, the encoded bitstream of the RAW image corresponding to the current photographing scene, to obtain a reconstructed RAW image corresponding to the current photographing scene; and

processing, by the cloud, the reconstructed RAW image corresponding to the current photographing scene, to generate an image in a first format corresponding to the current photographing scene, and sending the image in the first format to the terminal device.

9. The method according to claim 8, wherein the decoding, by the cloud, the encoded bitstream of the RAW image corresponding to the current photographing scene, to obtain a reconstructed RAW image corresponding to the current photographing scene comprises:

performing, by the cloud, entropy decoding on the encoded bitstream of the RAW image corresponding to the current photographing scene, to obtain a quantized compression feature of the RAW image corresponding to the current photographing scene;

dequantizing, by the cloud, the quantized compression feature of the RAW image corresponding to the current photographing scene, to obtain a compression feature of the RAW image corresponding to the current photographing scene; and
decompressing, by the cloud, the compression feature of the RAW image corresponding to the current photographing scene, to obtain the reconstructed RAW image corresponding to the current photographing scene.

**10.** The method according to claim 9, wherein when the RAW image corresponding to the current photographing scene comprises a plurality of frames, the decompressing, by the cloud, the compression feature of the RAW image corresponding to the current photographing scene, to obtain the reconstructed RAW image corresponding to the current photographing scene comprises:

decompressing, by the cloud, compression features of the plurality of frames of RAW images, to obtain a reconstructed RAW image corresponding to a reference frame and a residual image corresponding to another frame in the plurality of frames of RAW images;
determining, by the cloud, inter-frame correlation between the plurality of frames of RAW images based on a type of the current photographing scene; and
reconstructing, by the cloud, the plurality of frames of RAW images based on the reconstructed RAW image corresponding to the reference frame, the residual image corresponding to the another frame, and the inter-frame correlation between the plurality of frames of RAW images, to obtain a plurality of frames of reconstructed RAW images that are in a one-to-one correspondence with the plurality of frames of RAW images.

**11.** The method according to claim 10, wherein an encoded bitstream of the plurality of frames of RAW images further comprises metadata information of the plurality of frames of RAW images; and before the determining, by the cloud, inter-frame correlation between the plurality of frames of RAW images based on a type of the current photographing scene, the method further comprises:
determining, by the cloud, the type of the current photographing scene based on the metadata information of the plurality of frames of RAW images.

**12.** The method according to claim 8, wherein the encoded bitstream of the RAW image corresponding to the current photographing scene is obtained by performing, by the terminal device, channel coding on the RAW image corresponding to the current photographing scene in a distributed source coding manner;

when the RAW image corresponding to the current photographing scene comprises a plurality of frames, the encoded bitstream of the RAW image corresponding to the current photographing scene comprises a plurality of groups of bitstream packets in a one-to-one correspondence with the plurality of frames of RAW images; or when the RAW image corresponding to the current photographing scene comprises one frame, the encoded bitstream of the RAW image corresponding to the current photographing scene comprises a group of bitstream packets corresponding to the one frame of RAW image; and each group of bitstream packets comprises a plurality of bitstream packets, and each bitstream packet comprises at least an error correction code and metadata information of one frame of RAW image corresponding to the bitstream packet; and
the decoding, by the cloud, the encoded bitstream of the RAW image corresponding to the current photographing scene, to obtain a reconstructed RAW image corresponding to the current photographing scene comprises:

when the RAW image corresponding to the current photographing scene comprises the one frame, decoding, by the cloud based on an initial prediction value and in an intra-frame prediction manner, received bitstream packets corresponding to the one frame of RAW image, to obtain a reconstructed RAW image corresponding to the one frame of RAW image; or
when the RAW image corresponding to the current photographing scene comprises the plurality of frames, decoding, by the cloud based on an initial prediction value and in an intra-frame prediction manner, received bitstream packets corresponding to a first frame of RAW image, to obtain a reconstructed RAW image corresponding to the first frame of RAW image, and decoding, by the cloud based on at least one frame of reconstructed RAW image obtained through decoding and inter-frame correlation between the plurality of frames of RAW images, received bitstream packets corresponding to each frame of RAW image after the first frame of RAW image, to obtain a reconstructed RAW image corresponding to each frame of RAW image after the first frame of RAW image.

**13.** The method according to any one of claims 8 to 12, wherein when the reconstructed RAW image corresponding to the current photographing scene comprises a plurality of frames, the processing, by the cloud, the reconstructed RAW image corresponding to the current photographing scene, to generate an image in a first format corresponding to the current photographing scene comprises:

fusing, by the cloud in a RAW domain, the plurality of frames of reconstructed RAW images into one frame of reconstructed RAW image;

converting, by the cloud, the fused one frame of reconstructed RAW image from the RAW domain to a YUV domain, to obtain a YUV image corresponding to the one frame of reconstructed RAW image; and

encoding, by the cloud, the YUV image corresponding to the one frame of reconstructed RAW image into the first format, to obtain the image in the first format corresponding to the current photographing scene.

14. The method according to any one of claims 8 to 12, wherein when the reconstructed RAW image corresponding to the current photographing scene comprises a plurality of frames, the processing, by the cloud, the reconstructed RAW image corresponding to the current photographing scene, to generate an image in a first format corresponding to the current photographing scene comprises:

converting, by the cloud, the plurality of frames of reconstructed RAW images from a RAW domain to a YUV domain, to obtain a plurality of frames of YUV images that are in a one-to-one correspondence with the plurality of frames of reconstructed RAW images;

fusing, by the cloud in the YUV domain, the plurality of frames of YUV images that are in a one-to-one correspondence with the plurality of frames of reconstructed RAW images into one frame of YUV image; and

encoding, by the cloud, the fused one frame of YUV image into the first format, to obtain the image in the first format corresponding to the current photographing scene.

15. An electronic device, comprising a processor and a memory that is configured to store executable instructions of the processor, wherein

when the processor is configured to execute the instructions, the electronic device is enabled to implement the method according to any one of claims 1 to 7 or the method according to any one of claims 8 to 14.

16. A computer-readable storage medium, storing computer program instructions, wherein

when the computer program instructions are executed by an electronic device, the electronic device is enabled to implement the method according to any one of claims 1 to 7 or the method according to any one of claims 8 to 14.

FIG. 1

220

210

FIG. 2

FIG. 3

FIG. 4

Preview image

Camera button

Camera screen

FIG. 5

FIG. 6

Preview image

Camera button

Camera screen

Are you sure to upload it to a cloud for processing?

Yes

No

FIG. 7

Preview image

Camera screen

Mobile phone processing mode

Cloud processing mode

Camera button

FIG. 8

Encoding module

A plurality of frames of RAW images → AI encoding network → Compression features corresponding to the plurality of frames of RAW images → Quantization module → Quantized compression features corresponding to the plurality of frames of RAW images → Entropy encoding module → Encoded bitstream corresponding to the plurality of frames of RAW images

FIG. 9

Decoding module

Encoded
bitstream
corresponding
to a plurality of
frames of RAW
images

Quantized
compression features
corresponding to the
plurality of frames of
RAW images

Compression
features
corresponding to
the plurality of
frames of RAW
images

Reconstructed
RAW images in a
one-to-one
correspondence
with the plurality of
frames of RAW
images

Entropy
decoding
module

Dequantization
module

AI decoding
network

FIG. 10

FIG. 11

FIG. 12

Encoded
bitstream
corresponding to
a plurality of
frames of RAW
images

Decoding module

**Entropy decoding module**

Quantized
compression features
corresponding to the
plurality of frames of
RAW images

Reconstructed RAW image
corresponding to a reference frame
of RAW image , and reconstructed
residual image corresponding to
another frame of RAW image

**Correlation inverse processing module**

Reconstructed RAW
images in a one-to-
one correspondence
with the plurality of
frames of RAW
images

**Dequantization module**

Compression features corresponding to the
plurality of frames of RAW images

**AI decoding network**

FIG. 13

Cloud side

Decoding module

Decode

Whether correct decoding is performed

Yes

Reconstructed RAW image

No

Notify a mobile phone to continue to transmit a bitstream packet

Bitstream packet corresponding to the RAW image

RAW image

Encoding module (Distributed coding)

Device side

FIG. 14

Image processing apparatus

Camera module — 1501    Sending module — 1503

Encoding module — 1502    Receiving module — 1504

FIG. 15

Image processing apparatus

Receiving module — 1601    Processing module — 1603

Decoding module — 1602    Sending module — 1604

FIG. 16

## INTERNATIONAL SEARCH REPORT

| International application No. |
| --- |
| **PCT/CN2022/070815** |

**A. CLASSIFICATION OF SUBJECT MATTER**

H04N 21/234(2011.01)i; H04N 21/44(2011.01)i; H04N 19/70(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT: 相机, 拍摄, 采集, 捕获, 图像, 原始图像, RAW, 云, 服务器, 编码, 解码, 传输, 发送, camera, photography, collect, capture, image, original, RAW, cloud, server, code, encode, decode, transmit, send

**C. DOCUMENTS CONSIDERED TO BE RELEVANT**

| Category* | Citation of document, with indication, where appropriate, of the relevant passages | Relevant to claim No. |
| --- | --- | --- |
| X | CN 110139109 A (BEIJING SAMSUNG TELECOM R&D CENTER et al.) 16 August 2019 (2019-08-16) description paragraphs 61-378, 725-729, figures 1-19 | 1-16 |
| X | JP 2008236396 A (FUJIFILM CORP.) 02 October 2008 (2008-10-02) description, paragraphs 23-114, and figures 1-8 | 1-3, 7-8, 13-16 |
| X | CN 104918027 A (SONY CORPORATION) 16 September 2015 (2015-09-16) description, paragraphs 15-52, and figures 1-3 | 1-3, 7-8, 13-16 |
| X | JP 2003319311 A (FUJI PHOTO FILM CO., LTD.) 07 November 2003 (2003-11-07) description, paragraphs 1-32, and figures 1-7 | 1-3, 7-8, 13-16 |
| A | CN 110177289 A (NUBIA TECHNOLOGY CO., LTD.) 27 August 2019 (2019-08-27) entire document | 1-16 |
| A | WO 2018123078 A1 (NEXPOINT CO LTD) 05 July 2018 (2018-07-05) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 March 2022** | **29 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/070815**

| Patent document cited in search report | | | Publication date (day/month/year) | Patent family member(s) | | | Publication date (day/month/year) |
|---|---|---|---|---|---|---|---|
| CN | 110139109 | A | 16 August 2019 | WO | 2020159154 | A1 | 06 August 2020 |
|  |  |  |  | US | 2021235085 | A1 | 29 July 2021 |
| JP | 2008236396 | A | 02 October 2008 | | None | | |
| CN | 104918027 | A | 16 September 2015 | DE | 102015204118 | A1 | 17 September 2015 |
|  |  |  |  | US | 2015264246 | A1 | 17 September 2015 |
|  |  |  |  | US | 9693010 | B2 | 27 June 2017 |
|  |  |  |  | CN | 104918027 | B | 03 May 2019 |
| JP | 2003319311 | A | 07 November 2003 | | None | | |
| CN | 110177289 | A | 27 August 2019 | | None | | |
| WO | 2018123078 | A1 | 05 July 2018 | TW | 201824850 | A | 01 July 2018 |
|  |  |  |  | JP | 2018107655 | A | 05 July 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110026530